# FASCICULE DE BREVET EUROPEEN

(11) **EP 3 194 473 B1**
(45) Date de publication et mention de la délivrance du brevet: **31.10.2018**
(21) Numéro de dépôt: 15756164.8
(22) Date de dépôt: 27.08.2015
(51) Int. Cl.: C08G 81/02, C08F 230/02, C08G 65/332, C08L 23/08, C08L 71/02, C04B 24/32, C08F 283/06

(54) **COPOLYMÈRES À BLOCS UTILISABLES COMME FLUIDIFIANTS**
BLOCKCOPOLYMEREN UND IHRE VERWENDUNG ALS FLUIDISIERUNGSMITTELN
BLOCK COPOLYMERS FOR USE AS FLUIDIZING AGENT

(30) Priorité: 28.08.2014 FR 1458083
(43) Date de publication de la demande: 26.07.2017
(73) Titulaire: Chryso, 92440 Issy-Les-Moulineaux (FR)
(72) Inventeur: FERRARI, Lucia, F-91400 Orsay (FR); LEISING, Frédéric, F-60300 Avilly Saint Leonard (FR)
(74) Mandataire: Lavoix
(86) Numéro de dépôt international: PCT/EP2015/069688
(87) Numéro de publication internationale: WO 2016/030482

(56) Documents cités:
- WO-A1-2006/125892
- FR-A1- 2 637 511
- HELMUT CÖLFEN ET AL: "Crystal Design of Calcium Carbonate Microparticles Using Double-Hydrophilic Block Copolymers", LANGMUIR, vol. 14, no. 3, 17 janvier 1998 (1998-01-17), pages 582-589, XP055165910, ISSN: 0743-7463, DOI: 10.1021/la970765t
- A. MAYER; M. ANTONIETTI: "Investigation of polymer-protected noble metal nanoparticles by transmission electron microscopy: control of particle morphology and shape", COLLOID & POLYMER SCIENCE, vol. 276, no. 9, 1 octobre 1998 (1998-10-01), pages 769-779, XP055124343, DE ISSN: 0303-402X
- MILOS SEDLÁK ET AL: "Synthesis of Double-Hydrophilic Block Copolymers with Hydrophobic Moieties for the Controlled Crystallization of Minerals", MACROMOLECULAR CHEMISTRY AND PHYSICS, vol. 202, no. 4, 7 mars 2001 (2001-03-07), pages 587-597, XP055165716, ISSN: 1022-1352, DOI: 10.1002/1521-3935(20010201)202:4<587::AID- MACP587>3.0.CO;2-F

## Description

La présente invention concerne des polymères, leur procédé de préparation et leurs utilisations, notamment comme agent dispersant des particules minérales, comme agent fluidifiant des suspensions de particules minérales, comme promoteur d'adhésion, comme agent anticorrosion, comme agent ignifugeant, comme agent stabilisant lors du broyage de particules minérales, ou comme agent anti-tartre. Les polymères sont particulièrement utiles en tant qu'agent fluidifiant pour des compositions comprenant un liant hydraulique tel que du ciment.

Des dispersants ou fluidifiants sont usuellement ajoutés dans les suspensions aqueuses de particules minérales pour en abaisser la viscosité ou pour diminuer la teneur en eau de ces suspensions. Les suspensions concernées sont notamment des suspensions de sels de calcium ou le sulfate de calcium, ou des suspensions d'oxydes minéraux, comme le dioxyde de titane ou l'oxyde de fer. Ce n'est qu'après avoir été fluidifiées que ces suspensions peuvent servir à la préparation de produits industriels divers dont les peintures, des produits pour l'enduction du papier et des formulations pour des caoutchoucs et pour des résines synthétiques.

Des fluidifiants, également appelés plastifiants ou superplastifiants, sont usuellement ajoutés aux liants hydrauliques tels que les ciments, les plâtres, les sulfates de calcium ou la chaux, pour diminuer la teneur en eau de la pâte de liant hydraulique. De ce fait, la pâte de liant hydraulique présente, après durcissement, une structure plus dense, ce qui se traduit par une résistance mécanique plus élevée. Dans ce cadre, on peut citer l'utilisation de copolymères peignes de type polycarboxylates comme superplastifiant, qui a rendu possible la préparation de bétons fluides, même avec moins d'eau qu'il n'en faut pour hydrater les constituants du ciment. Ces superplastifiants sont des polymères ramifiés dont la chaîne principale comporte des groupes carboxyliques et dont les chaînes latérales sont composées de longues séquences de type polyéther, en particulier le polyoxyde d'éthylène, comme par exemple le poly [acide (méth)acrylique - greffé - polyoxyde d'éthylène].

D'autres superplastifiants polymères pour la fluidification des mortiers de béton ont été développés, comme les mono- chaînes poly (oxyde d'éthylène) bis-phosphonates décrit dans le brevet FR 2 696 736, et commercialisés par la Société CHRYSO sous le nom de CHRYSO®Fluid Optima 100.

D'autres superplastifiants polymères comprenant des groupes latéraux phosphonés sont également décrits dans les demandes FR 2 892 420 et FR 2 974 090. Les polymères qui y sont décrits ne sont pas des copolymères à blocs.

La demande FR 2 892 420 décrit des polymères peignes dont les groupes phosphoniques sont fixés sur le squelette principal par des rotules amino-bis alkylènephosphonique et obtenus :
- soit par copolymérisation radicalaire d'un composé à insaturation éthylénique comprenant un groupe phosphonate, d'un composé à insaturation éthylénique polyoxyalkylé et éventuellement d'un acide carboxylique ou d'un ester à insaturation éthylénique en présence d'un catalyseur,
- soit par un procédé dit de « postgreffage » comprenant le greffage de groupes latéraux phosphonés et/ou polyoxyalkylés sur un polymère comprenant une chaîne hydrocarbonée et des groupes carboxyliques.

La synthèse du composé à insaturation éthylénique comprenant un groupe amino-bis alkylènephosphonique est réalisée par une réaction de MOEDRITZER - IRANI qui nécessite l'utilisation de formaldéhyde.

La demande FR 2 974 090 décrit des polymères peignes dont les groupes latéraux comprennent des groupes gem-bisphosphonés, obtenus :
- soit par copolymérisation radicalaire d'un monomère comprenant un groupe gem-bisphosphonate, d'un monomère comprenant un groupe polyoxyalkylé et d'un monomère portant un groupe carboxylique en présence d'un catalyseur,
- soit par un procédé dit de « postgreffage » comprenant le greffage de groupes latéraux gem-bisphosphonés sur un polymère comprenant une chaîne hydrocarbonée et des groupes carboxyliques et polyoxyalkylés.

La préparation de polymères à partir de monomères à insaturation éthylénique comprenant une fonction phosphonate, notamment de monomère comprenant une fonction vinyl phosphonate, est souvent délicate. En particulier, la préparation de polymères à partir d'acide vinylphosphonique ou de vinylphosphonate de diméthyle ou de diéthyle est difficile, car ces monomères présentent une faible polymérisabilité due à l'existence de réactions secondaires indésirables en présence de radicaux. La synthèse d'homopolymères ou de copolymères comprenant des monomères porteurs de fonctions phosphonate est généralement effectuée par voie radicalaire conventionnelle, c'est-à-dire par un mécanisme non contrôlé.

Parmi les principales techniques de polymérisation radicalaire " vivante " ou contrôlée, on peut citer la polymérisation radicalaire par transfert d'atome (ATRP), la polymérisation radicalaire contrôlée par les radicaux stables de type nitroxyle (NMP), la polymérisation par transfert dégénératif d'iode (ITP) et la polymérisation par transfert réversible par addition-fragmentation (RAFT).

Les demandes WO 2006/125892 et WO 2007/085623 décrivent un copolymère à blocs comprenant :
- au moins un bloc A obtenu par la polymérisation d'un mélange de monomères à insaturation éthylénique (A₀) ne comprenant pas de monomères à fonctions vinyl phosphonate, et
- au moins un bloc B obtenu par la polymérisation d'un mélange de monomères à insaturation éthylénique (B₀) comprenant au moins un monomère B₁ portant au moins une fonction vinyl phosphonate.
Ce copolymère à blocs est exempt de groupes polyoxyalkylé.

Dans la demande WO 2007/085623, ce copolymère est obtenu par un procédé de polymérisation par transfert d'iode (ITP) comprenant les étapes suivantes :
(a) on réalise une polymérisation radicalaire menant à l'obtention d'un polymère fonctionnalisé en son extrémité par un atome d'iode utile à titre d'agent de transfert dans une réaction de polymérisation radicalaire contrôlée, ladite étape étant conduite en mettant en contact :
   - des molécules monomères éthyléniquement insaturées,
   - une source de radicaux libres, et
   - au moins un agent de transfert iodé,
(b) on réalise, suite à l'étape (a), une étape de polymérisation radicalaire, ou plusieurs étapes successives de polymérisations radicalaires, ladite ou lesdites étape(s) consistant chacune à effectuer une polymérisation radicalaire menant à l'obtention d'un copolymère à blocs fonctionnalisé en son extrémité par un atome d'iode utile à titre d'agent de transfert dans une réaction de polymérisation radicalaire, ladite ou lesdites étapes étant conduite(s) en mettant en contact :
   - des molécules monomères éthyléniquement insaturées dont au moins une est différente de celles mis en oeuvre dans l'étape précédente,
   - une source de radicaux libres, et
   - le polymère fonctionnalisé issu de l'étape précédente ;
   étant entendu que l'une des étapes de polymérisation (a) et (b) définies ci-dessus conduit à la formation du bloc B, et qu'une autre des étapes de polymérisation des étapes (a) et (b) conduit à la formation du bloc A.

Dans la demande WO 2006/125892, ce copolymère est obtenu par un procédé de polymérisation radicalaire contrôlée de type RAFT comprenant les étapes suivantes :
(a) on réalise une polymérisation radicalaire contrôlée menant à l'obtention d'un polymère fonctionnalisé utile à titre d'agent de contrôle dans une réaction de polymérisation radicalaire contrôlée, ladite étape étant conduite en mettant en contact :
   - des molécules monomères éthyléniquement insaturées,
   - une source de radicaux libres, et
   - au moins un agent de contrôle notamment choisi parmi les dithioesters, les thioethers-thiones, les trithiocarbonates, les dithiocarbamates dont les N,N-dialkyldithiocarbamates, les dithiocarbazates et les xanthates, de préférence du O-éthyl-S-(i-méthoxycarbonyl)éthyl) xanthate,
(b) on réalise, suite à l'étape (a), une étape de polymérisation radicalaire contrôlée, ou plusieurs étapes successives de polymérisations radicalaires contrôlées, ladite ou lesdites étape(s) consistant chacune à effectuer une polymérisation radicalaire contrôlée menant à l'obtention d'un copolymère à blocs fonctionnalisé utile à titre d'agent de contrôle dans une réaction de polymérisation radicalaire contrôlée, ladite ou lesdites étapes étant conduite(s) en mettant en contact :
   - des molécules monomères éthyléniquement insaturées différentes de celles mises en oeuvre dans l'étape précédente,
   - une source de radicaux libres, et
   - le polymère fonctionnalisé issu de l'étape précédente,
   étant entendu que l'une des étapes de polymérisation (a) et (b) définies ci- dessus conduit à la formation du bloc B, et qu'une autre des étapes de polymérisation des étapes (a) et (b) conduit à la formation du bloc A.
Dans les exemples, un copolymère dibloc polyacide acrylique - b- polyacide vinylphosphonique P(AA)-b-P(AVP) a été préparé.

Selon un premier objet, l'invention concerne un copolymère à blocs (également appelé copolymère séquencé) comprenant :
- au moins un bloc A ne comprenant pas de groupe phosphonate, et comprenant au moins un groupe poly (oxyde d'alkylène), et
- au moins un bloc B obtenu par la polymérisation d'un monomère B1 ou d'un mélange de monomères à insaturation éthylénique comprenant au moins un monomère B1, où un monomère B1 est un monomère à insaturation éthylénique comprenant au moins une fonction phosphonate.

De préférence, le copolymère à blocs selon l'invention est diblocs ou triblocs. Les copolymères diblocs sont particulièrement préférés. Le polymère à blocs peut comprendre un bloc constitué d'un polymère peigne, qui comprend une chaîne principale et des groupes pendants. Généralement, au moins l'un des blocs du copolymère à blocs n'est pas un copolymère peigne.

Les blocs du copolymère à blocs sont liés par liaison covalente. Les blocs peuvent être liés entre eux par une unité de jonction qui ne correspond pas à une unité constitutive des blocs A ou B.

Le copolymère à blocs selon l'invention comprend au moins un bloc A comprenant au moins un groupe poly (oxyde d'alkylène). Le copolymère à blocs selon l'invention peut comprendre plusieurs blocs A de natures identiques ou différentes.

De préférence, dans chaque bloc A, chaque groupe poly (oxyde d'alkylène) a indépendamment la formule (I) suivante :

R₃-(O-R₄)ₙ- (I)

dans laquelle :
- R₃ est un atome d'hydrogène ou un groupe hydrocarboné monovalent comportant de 1 à 12 atomes de carbone et éventuellement un ou plusieurs hétéroatomes,
- n représente un nombre entier de 2 à 500, de préférence de 3 à 200,
- chaque R₄ représente indépendamment un alkylène linéaire ou ramifié comprenant de 2 à 6 atomes de carbone.

Au sens de la présente demande :
- les hétéroatomes préférés sont l'oxygène ou l'azote,
- le phényle est l'aryle préféré,
- sauf mention contraire, les groupes alkyle et alcényle comportent généralement de 1 à 12 atomes de carbone, typiquement de 1 à 6 atomes de carbone, les groupes aryle comprennent généralement de 6 à 10 atomes de carbone, les groupes alkylaryle ou arylalkyle comporte généralement de 7 à 12 atomes de carbone. Les groupes alkyle et alcényle sont linéaires ou ramifiés.
- par atome d'halogène on entend le chlore, le fluor, le brome, ou l'iode. De préférence, l'halogène est un chlore.

Dans le cadre de l'invention par les expressions (méth)acrylique, (méth)acrylate, (méth)acrylamide, on entend respectivement les acryliques et méthacryliques, les acrylates et méthacrylates, les acrylamides et méthacrylamides.

De préférence, dans la formule (I) ci-dessus, R₃ représente un atome d'hydrogène, un alkyle, un aryle, un alkylaryle ou un arylalkyle comportant de 1 à 12 atomes de carbone, où les alkyles sont linéaires ou ramifiés. Typiquement, R₃ représente H ou Me.

De préférence, chaque R₄ représente indépendamment un groupe -CH₂-CH₂-, -CHCH₃-CH₂-, -CH₂-CHCH₃- ou -CH₂-CH₂-CH₂-. Les groupes poly (oxyde d'alkylène) sont alors des poly(oxyde d'éthylène), des poly(oxyde de propylène) ou leurs copolymères. Les poly(oxyde d'éthylène) et copolymères (oxyde d'éthylène-co-oxyde de propylène) sont des groupes poly (oxyde d'alkylène) particulièrement préférés. Typiquement, les poly(oxyde d'éthylène) sont des poly(oxyde d'éthylène) (POE) 350, 750, 1000, 2000, 3000 ou 5000.

Le bloc A du copolymère à blocs selon l'invention comprend des groupes poly (oxyde d'alkylène), notamment de formule (I) ci-dessus.

Selon une première alternative, le bloc A comprend typiquement une chaîne principale, généralement une chaîne hydrocarbonée, et des groupes latéraux (également appelés groupes pendants) dont au moins une partie comprend (ou consiste en) au moins un groupe poly (oxyde d'alkylène). Ces groupes poly (oxyde d'alkylène) peuvent être liés à la chaine principale directement ou par l'intermédiaire de groupes espaceurs, typiquement des groupes comprenant des fonctions éther, ester ou amide. Dans cette alternative, le bloc A est sous forme de polymère peigne.

Typiquement, le bloc A est alors obtenu par la polymérisation d'un monomère A1 ou d'un mélange de monomères à insaturation éthylénique comprenant au moins un monomère A1, où un monomère A1 est un monomère à insaturation éthylénique et comprenant au moins un groupe poly (oxyde d'alkylène). Le monomère A1 peut par exemple avoir la formule (II) suivante : 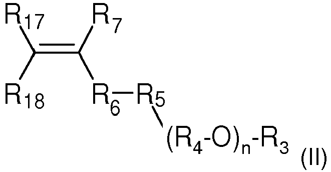 dans laquelle :
- n, R₃ et R₄ sont tels que définis ci-dessus,
- R₅ représente -CH₂-, -O- ou -NR₈- où R₈ représente H ou un alkyle linéaire ou ramifié comprenant de 1 à 6 atomes de carbone, de préférence H ou Me,
- R₆ est absent ou représente -(C=O)- ou -(CH₂)_{q}-, où q représente 1, 2 ou 3,
- R₇ représente H ou Me, et
- R₁₇ et R₁₈ représentent indépendamment H ou Me, typiquement R₁₇ et R₁₈ représentent Me ou R₁₇ et R₁₈ représentent H, de préférence R₁₇ et R₁₈ représentent H.

Parmi les monomères A1 de formule (II), les monomères A1 de formule (IIIa), (IIIb), (IIIc) et (IIId) suivantes sont particulièrement préférés : 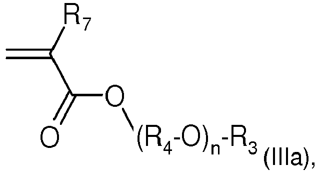 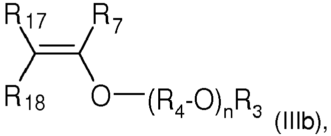 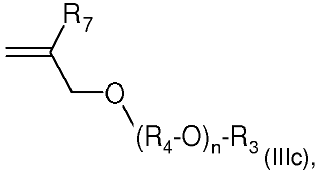 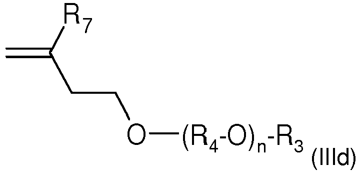 dans lesquelles n, R₇, R₃, R₄, R₁₇ et R₁₈ sont tels que définis ci-dessus.

Le bloc A peut par exemple être obtenu par la polymérisation d'un mélange de monomères à insaturation éthylénique comprenant (ou consistant en) un monomère A1 de formule (IIIa), (IIIb), (IIIc), (IIId) ou d'un mélange de ceux-ci.

De préférence, chaque bloc A du copolymère à blocs est obtenu par la polymérisation d'un mélange de monomères à insaturation éthylénique comprenant au moins 60% en poids, typiquement au moins 80% en poids, par exemple au moins 95% en poids et jusqu'à 100% en poids de monomères A1 à insaturation éthylénique et comprenant au moins un groupe poly (oxyde d'alkylène).

Dans un mode de réalisation, chaque bloc A est obtenu par la polymérisation d'un mélange de monomères A1 à insaturation éthylénique et comprenant au moins un groupe poly (oxyde d'alkylène), par exemple par polymérisation d'un monomère de formule (IIIa), (IIIb), (IIIc) ou (IIId) telles que définies ci-dessus ou d'un mélange de ceux-ci.

Dans un autre mode de réalisation, au moins un bloc A est obtenu par la polymérisation d'un mélange de monomères à insaturation éthylénique comprenant :
- au moins un monomère A1 à insaturation éthylénique et comprenant au moins un groupe poly (oxyde d'alkylène), notamment tel que défini ci-dessus, et
- au moins un autre monomère à insaturation éthylénique (exempt de groupe poly (oxyde d'alkylène).
Typiquement, au moins un bloc A est obtenu par la polymérisation d'un mélange de monomères à insaturation éthylénique comprenant :
- de 60 à 100% en poids d'un monomère A1 à insaturation éthylénique et comprenant au moins un groupe poly (oxyde d'alkylène), notamment tel que défini ci-dessus, et
- de 0 à 40% en poids d'un autre monomère à insaturation éthylénique (exempt de groupe poly (oxyde d'alkylène).

Cet(s) autre(s) monomère(s) à insaturation éthylénique peut(vent indépendamment) être :
- un monomère A2 exempt de fonction susceptible de se lier à l'ion calcium ou aux ions anioniques présents en surface d'une particule minérale, typiquement un monomère exempt de groupe ionique, ou
- un monomère A3 comprenant :
   - au moins une fonction susceptible de se lier à l'ion calcium (typiquement un monomère comprenant un groupe anionique, par exemple une fonction carboxylate), et/ou
   - au moins une fonction susceptible de se lier aux ions anioniques présents en surface d'une particule minérale (typiquement un monomère comprenant un groupe cationique, par exemple une fonction ammonium quaternaire).

Le monomère A3 est typiquement porteur d'un groupe ionique. De préférence, chaque bloc A du copolymère à blocs est obtenu par polymérisation d'un mélange de monomères comprenant moins de 10% en poids de monomères A3. De préférence, chaque bloc A du copolymère à blocs est obtenu par polymérisation d'un mélange de monomères comprenant moins de 10% en poids de monomères comprenant un groupe ionique. Au sens de la demande, un groupe est considéré comme ionique s'il est ionique dans une solution aqueuse de pH compris entre 8 et 13. Par exemple, une fonction acide carboxylique forme une fonction carboxylate à ces pH et est considérée comme ionique. Parmi les groupes ioniques, on peut citer les groupes, acide carboxylique, carboxylate, ammonium quaternaire, acide sulfonique, sulfonate, ou acide boronique.

Parmi les monomères A2 exempt de fonction susceptible de se lier à l'ion calcium ou aux ions anioniques présents en surface d'une particule minérale, on peut citer :
- les mono-alkylesters d'acides mono- carboxyliques insaturés éthyléniques et les di-alkylesters d'acides di-carboxyliques insaturés éthyléniques (tels que les mono-alkylesters d'acide acrylique, d'acide méthacrylique, d'acide itaconique, d'acide maléique, ou d'acide fumarique), de préférence obtenus par estérification avec des alcools en C3-C10, comme l'hydroxypropyl(méth)acrylate, l'acrylate de propyle, l'acrylate de n-butyle, l'acrylate d'isobutyle, l'acrylate de 2-éthylhexyle, l'acrylate de t-butyle, le méthacrylate de n-butyle, le méthacrylate d'isobutyle, ou
- les amides comme l'acrylamide ou le méthacrylamide, ou
- les monomères éthyléniques comprenant un groupe uréido tels que l'éthylène urée éthyl méthacrylamide, ou l'éthylène urée éthyl méthacrylate, ou
- les amides cycliques de la vinylamine, tel que le N-vinylpyrrolidone et le vinylcaprolactame, ou
- les nitriles vinyliques contenant de 3 à 12 atomes de carbone, et notamment l'acrylonitrile ou le méthacrylonitrile, ou
- les esters vinyliques d'acides carboxyliques, comme l'acétate de vinyle (VAc), le versatate de vinyle, ou le propionate de vinyle, ou
- les halogénures de vinyle ou de vinylidène, par exemple le chlorure de vinyle, le fluorure de vinyle, le chlorure de vinylidène et le fluorure de vinylidène, ou
- les monomères dérivés styréniques tels que le styrène, l'alphaméthylstyrène, le paraméthylstyrène ou le paratertiobutylstyrène, ou
- les (méth)acrylates d'aminoalkyle, les (méth)acrylamides d'aminoalkyle dans lesquels la fonction amine est primaire, secondaire ou tertiaire, tels que le diméthyl amino éthyl (méth)acrylate, diméthyl amino propyl (méth)acrylate, le ditertiobutyl aminoéthyl (méth)acrylate, le diméthyl amino méthyl (méth)acrylamide, le diméthyl amino propyl (méth)acrylamide, l'éthylène imine, la vinylamine, la 2- vinylpyridine, la 4-vinylpyridine.

De préférence, les monomères A2 sont choisis parmi sont choisies parmi l'hydroxyéthyl(méth)acrylate, l'hydroxypropyl(méth)acrylate, l'acrylamide (Am) ou le méthacrylamide, la N-vinylpyrrolidone, le styrène, l'acétate de vinyle (VAc), le chlorure de vinyle, le chorure de vinylidène, le fluorure de vinylidène ou leurs mélanges.

Parmi les monomères A3 comprenant au moins une fonction susceptible de se lier à l'ion calcium, et/ou au moins une fonction susceptible de se lier aux ions anioniques présents en surface d'une particule minérale, on peut citer :
- les acides mono- et di-carboxyliques insaturés éthyléniques tels que l'acide acrylique, l'acide méthacrylique, l'acide itaconique, l'acide maléique, ou l'acide fumarique,
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères porteurs d'une fonction acide boronique tel que le p-vinylphényl acide boronique, ou
- les monomères cationiques choisis parmi les (méth)acrylates d'aminoalkyle, les (méth)acrylamides d'aminoalkyle dans lesquels la fonction amine est quaternaire, les sels d'ammonium de diallyldialkyl (ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate), tels que le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl, ou leurs sels, ou
- les esters de l'acide acrylique ou de l'acide méthacrylique avec des alcools en C1 - C2, tels que, par exemple, l'acrylate de méthyle, l'acrylate d'éthyle, le méthacrylate de méthyle, le méthacrylate d'éthyle. Ces esters s'hydrolysent en effet très rapidement en fonction carboxylate en milieu aqueux basique.

Dans cette première alternative, le bloc A du copolymère à blocs selon l'invention présente généralement une masse molaire moyenne comprise entre 350 et 50000 g/mol (Mw), de préférence entre 10000 et 20000 g/mol (Mw) tel que déterminé par SEC («size exclusion chromatography», chromatographic liquide par exclusion moleculaire) en équivalent de poly(oxyde d'éthylène) étalon.

Chaque bloc A selon cette première alternative peut indépendamment être un homopolymère (le bloc A étant alors obtenu par la polymérisation d'un monomère A1 à insaturation éthylénique et comprenant au moins un groupe poly (oxyde d'alkylène)), un copolymère statistique, un copolymère alterné ou un copolymère à gradient de composition.

Selon une seconde alternative, le bloc A du copolymère à blocs selon l'invention consiste en un poly (oxyde d'alkylène), notamment en un poly(oxyde d'alkylène) de formule (I) telle que définie ci-dessus.

Dans cette seconde alternative, le bloc A du copolymère à blocs selon l'invention présente généralement une masse molaire moyenne comprise entre 100 et 50000 (Mw), de préférence entre 100 et 20000 (Mw).

Lorsque le copolymère à blocs selon l'invention comprend plusieurs blocs A, chaque bloc A peut indépendamment être selon la première ou la seconde alternative décrite ci-dessus.

Le bloc A du copolymère ne comprend pas de groupe phosphonate, alors que le bloc B en comprend. Le bloc A et le bloc B du copolymère selon l'invention sont donc de natures différentes.

Le copolymère à bloc selon l'invention comprend au moins un bloc B obtenu par la polymérisation d'un monomère B1 ou d'un mélange de monomères à insaturation éthylénique comprenant au moins un monomère B1, où B1 est un monomère à insaturation éthylénique comprenant au moins une fonction phosphonate.

Le bloc B du copolymère à blocs peut être exempt de groupe poly (oxyde d'alkylène).

Le monomère B1 a la formule (IV) suivante : 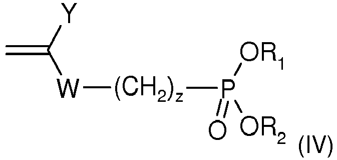 dans laquelle :
- Y représente :
   - un alkyle linéaire ou ramifié ayant de 1 à 6 atomes de carbone,
   - un groupe -W-(CH₂)_{z}-P(=O)(OR₁)(OR₂), ou
   - un groupe (CH₂)ₓ-R₂₅, où x représente un nombre entier compris entre 0 et 4 et R₂₅ représente un atome d'hydrogène, un phényle ou un groupe -CN ou -CO₂R₉,
- z représente un nombre entier compris entre 0 et 4,
- W représente une liaison simple ou un groupe -COO- ou -CONH-, étant entendu que lorsque z représente 0, W représente une liaison simple,
- R₁, R₂ et R₉ représentent indépendamment H, un phényle ou un alkyle linéaire ou ramifié ayant de 1 à 6 atomes de carbone et éventuellement substitué par un ou plusieurs halogènes.

De préférence, dans la formule (IV), W représente une liaison simple et z représente 0. Le monomère B1 est alors un monomère porteur d'au moins une fonction vinylphosphonate. Des monomères B1 porteurs d'au moins une fonction vinylphosphonate de formule (IV') suivante : 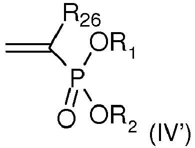 dans laquelle :
- R₂₆ représente un alkyle linéaire ou ramifié ayant de 1 à 6 atomes de carbone, P(=O)(OR₁)(OR₂), un atome d'hydrogène, un phényle ou un groupe -CN ou -CO₂R₉, et
- R₁, R₂ et R₉ sont tels que définis ci-dessus,
sont particulièrement préférés.

Parmi les monomères B1 portant au moins une fonction vinylphosphonate utiles dans la présente invention, on peut citer notamment l'acide vinyl phosphonique, le diméthyl ester de l'acide vinyl phosphonique, le bis(2-chloroethyl) ester de l'acide vinyl phosphonique, l'acide vinylidène diphosphonique, le tétraisopropylester de l'acide vinylidène diphosphonique, ou l'acide alpha-styrène phosphonique, ou leurs mélanges.

Le monomère B1 préféré selon l'invention est l'acide vinyl phosphonique.

Les monomères B1 à insaturation éthylénique comprenant une fonction mono ou diacide phosphonique peuvent être utilisés sous forme d'acide libre, ou sous forme de leurs sels. Ils peuvent être neutralisés, partiellement ou totalement, éventuellement par un aminoalcool ou par une amine, par exemple la dicyclohexylamine.

Le bloc B peut par exemple être obtenu par la polymérisation d'un ou de plusieurs monomère(s) de formule (IV).

Le bloc B peut être obtenu par la polymérisation d'un mélange de monomères à insaturation éthylénique comprenant :
- au moins un monomère B1 à insaturation éthylénique comprenant au moins une fonction phosphonate, tel que défini ci-dessus, et
- au moins un autre monomère à insaturation éthylénique (de préférence exempt de groupe poly (oxyde d'alkylène)).

Généralement, chaque bloc B du copolymère à blocs est obtenu par la polymérisation d'un mélange de monomères à insaturation éthylénique comprenant de 5 à 100% en poids d'au moins un monomère B1 à insaturation éthylénique comprenant au moins une fonction phosphonate.

De préférence, chaque bloc B du copolymère à blocs est obtenu par la polymérisation d'un mélange de monomères à insaturation éthylénique comprenant au moins 30% en poids, notamment au moins 40% en poids, par exemple au moins 50% en poids, typiquement au moins 75% en poids, par exemple au moins 90% en poids et jusqu'à 100% en poids de monomère B1 à insaturation éthylénique comprenant au moins une fonction phosphonate.

Cet(s) autre(s) monomère(s) à insaturation éthylénique peut(vent) être un monomère B2 hydrophile ou ionique ou un monomère B3 non ionique.

De préférence, chaque bloc B du copolymère à blocs est obtenu par polymérisation d'un mélange de monomères comprenant moins de 10% en poids de monomère B3 non ionique. Chaque bloc B peut être obtenu par polymérisation d'un mélange de monomères exempt de monomère B3 non ionique.

Parmi les monomères B2 hydrophiles ou ioniques, on peut citer :
- les acides mono- et di-carboxyliques insaturés éthyléniques tels que l'acide acrylique, l'acide méthacrylique, l'acide itaconique, l'acide maléique, ou l'acide fumarique et leurs dérivés tels que les mono-alkylesters de préférence avec des alcools en C1-C4, et les amides comme l'acrylamide, le méthacrylamide, et les anhydrides tels que l'anhydride maléique, ou
- les nitriles vinyliques contenant 3 atomes de carbone, notamment l'acrylonitrile ;
- les monomères éthyléniques comprenant un groupe uréido tels que l'éthylène urée éthyl méthacrylamide, ou l'éthylène urée éthyl méthacrylate, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères porteurs d'une fonction acide boronique tel que le p-vinylphényl acide boronique, ou
- les monomères cationiques choisis parmi les (méth)acrylates d'aminoalkyle, les (méth)acrylamides d'aminoalkyle ; les monomères comprenant au moins une fonction aminé secondaire, tertiaire ou quaternaire, ou un groupe hétérocyclique contenant un atome d'azote ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acrylate, le diméthyl amino méthyl (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl seuls ou en mélanges, ou leurs sels correspondants, ou
- les amides cycliques de la vinylamine, tel que le N-vinylpyrrolidone et le vinylcaprolactame, ou
- de monomères vinyliques porteurs de groupements ester dont l'hydrolyse conduit à des fonctions alcool, comme l'acétate de vinyle par exemple, ou
- plus généralement, de monomères pouvant être rendus hydrophiles par modification chimique d'un bloc hydrophobe, par exemple par hydrolyse d'un acrylate d'alkyle en acide acrylique, ou
- un monomère à insaturation éthylénique comprenant une fonction phosphonique ou phosphonate, par exemple une fonction aminométhylène bisphosphonique ou gem-bisphosphonique. On peut par exemple citer les monomères de formules (X), (XI), (XII) et (XIII) suivantes : 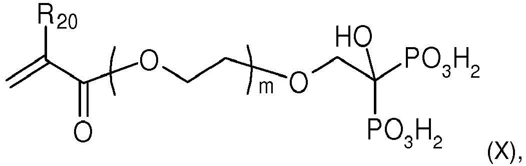 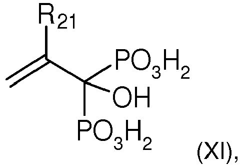 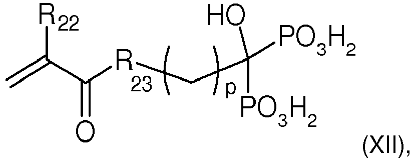 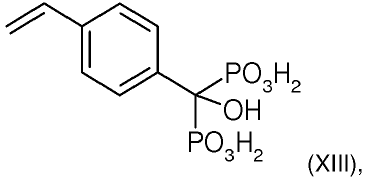
dans lesquelles :
- R₂₀, R₂₁ et R₂₂ représentent H ou Me,
- R₂₃ représente O ou NH,
- m et p représentent un nombre entier de 1 à 100.
ou leurs sels. Comme exemple de monomère de formule (XII), on peut citer les monomères issus de la réaction entre l'acide (méth)acrylique et l'acide pamidronique ou l'acide alendronique de formules (XIIa) et (XIIb) suivantes : 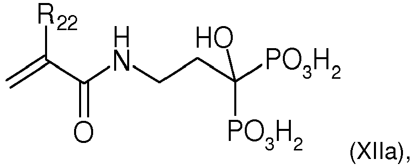 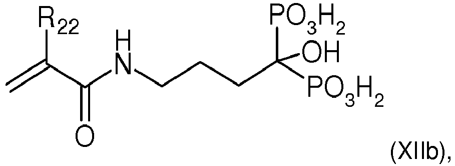 dans lesquelles R₂₂ est tel que défini ci-dessus.

De préférence, les monomères B2 hydrophiles ou ioniques sont choisis parmi l'acide acrylique (AA), l'acide méthacrylique, l'acrylamide (Am), la N-vinylpyrrolidone, l'acétate de vinyle, un monomère à insaturation éthylénique comprenant une fonction aminométhylène bisphosphonique ou gem-bisphosphonique, notamment ceux définis ci-dessus, un monomère à insaturation éthylénique comprenant une fonction sulfonique ou sulfonate, tel que l'acide 2-acrylamido-2-méthyl-propanesulfonique (AMPS), le sulfonate de styrène (SS) ou l'acide vinyl sulfonique (AVS), ou leurs mélanges.

De manière encore plus préférentielle les monomères B2 hydrophiles ou ioniques sont choisis parmi l'acide acrylique (AA), l'acide méthacrylique, l'acide 2-acrylamido-2-méthyl-propanesulfonique (AMPS), le sulfonate de styrène (SS) ou l'acide vinyl sulfonique (AVS) et un monomère à insaturation éthylénique comprenant une fonction aminométhylène bisphosphonique ou gem-bisphosphonique, notamment ceux définis ci-dessus.

Parmi les monomères B3 non ioniques, on peut citer :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C3-C12, de préférence en C1 -C8, éventuellement fluorés, tels que, par exemple, l'acrylate de propyle, l'acrylate de n-butyle, l'acrylate d'isobutyle, l'acrylate de 2-éthylhexyle, l'acrylate de t-butyle, le méthacrylate de n-butyle, le méthacrylate d'isobutyle,
- les nitriles vinyliques contenant de 4 à 12 atomes de carbone, et notamment le méthacrylonitrile,
- les esters vinyliques d'acides carboxyliques, comme l'acétate de vinyle (VAc), le versatate de vinyle, ou le propionate de vinyle, et
- les halogénures de vinyle ou de vinylidène, par exemple le chlorure de vinyle, le fluorure de vinyle, le chlorure de vinylidène et le fluorure de vinylidène.

De préférence, les monomères B3 non ioniques du bloc B sont des esters de l'acide acrylique avec des alcools linéaires ou ramifiés en C1 -C8, et en particulier en C1 - C4, comme, par exemple, l'acrylate de méthyle, l'acrylate d'éthyle, l'acrylate de propyle, l'acrylate de butyle (ABu) ou l'acrylate de 2-éthylhexyle (A2EH), les acrylates fluorés, ou bien des dérivés styréniques tels que le styrène, ou l'acétate de vinyle (VAc), ou le chlorure de vinyle, ou le chorure de vinylidène, ou le fluorure de vinylidène.

De préférence, l'(es) autre(s) monomère(s) à insaturation éthylénique est(sont) un(des) monomère(s) B2 hydrophile(s) ou ionique(s) et comporte(nt) au moins un groupe COOH et/ou une fonction phosphonique ou phosphonate et/ou une fonction sulfonique. Ces groupements ont en effet une bonne affinité pour les liants hydrauliques, et leur présence améliore l'efficacité du copolymère à blocs selon l'invention comme fluidifiant pour les liants hydrauliques. Par exemple, les autres monomères peuvent être l'acide acrylique, méthacrylique, un monomère à insaturation éthylénique comprenant une fonction sulfonique ou sulfonate (tel que l'acide 2-acrylamido-2-méthyl-propanesulfonique (AMPS), le sulfonate de styrène (SS) ou l'acide vinyl sulfonique (AVS)), ou un monomère à insaturation éthylénique comprenant une fonction aminométhylène bisphosphonique ou gem-bisphosphonique (notamment les monomères de formules (X), (XI), (XII) et (XIII) définies ci-dessus).

Selon un mode préféré de l'invention, le bloc B est obtenu par la polymérisation d'un mélange de monomères à insaturation éthylénique comprenant :
- au moins un monomère B1 à insaturation éthylénique comprenant au moins une fonction phosphonate, notamment tel que défini ci-dessus,
- au moins un monomère B2 choisi parmi l'acide acrylique, l'acide méthacrylique, un monomère à insaturation éthylénique comprenant une fonction aminométhylène bisphosphonique ou gem-bisphosphonique (notamment les monomères de formules (X), (XI), (XII) et (XIII) définies ci-dessus) ou un monomère à insaturation éthylénique comprenant une fonction sulfonique ou sulfonate (tel que l'acide 2-acrylamido-2-méthyl-propanesulfonique (AMPS), le sulfonate de styrène (SS) ou l'acide vinyl sulfonique (AVS)).
Par exemple, le bloc B est obtenu par la polymérisation d'un mélange de monomères à insaturation éthylénique comprenant :
- de 30% à 100% en poids, de préférence de 50 à 100% en poids de monomère B1 à insaturation éthylénique comprenant au moins une fonction phosphonate, notamment tel que défini ci-dessus,
- de 0% à 70% en poids, de préférence de 0 à 50% en poids de monomère B2 choisi parmi l'acide acrylique, l'acide méthacrylique, un monomère à insaturation éthylénique comprenant une fonction aminométhylène bisphosphonique ou gem-bisphosphonique (notamment les monomères de formules (X), (XI), (XII) et (XIII) définies ci-dessus) ou un monomère à insaturation éthylénique comprenant une fonction sulfonique ou sulfonate (tel que l'acide 2-acrylamido-2-méthylpropanesulfonique (AMPS), le sulfonate de styrène (SS) ou l'acide vinyl sulfonique (AVS)).
Chaque bloc B peut indépendamment être un homopolymère (le bloc B étant alors obtenu par la polymérisation d'un monomère B1 à insaturation éthylénique comprenant au moins une fonction phosphonate), un copolymère statistique, un copolymère alterné ou un copolymère à gradient de composition.

Le polymère du bloc B selon l'invention a généralement un degré de polymérisation de 2 à 50, typiquement de 3 à 15, de préférence de 3 à 10, par exemple 4 ou 5 ou 12. Des degrés de polymérisation de 3 à 10, par exemple 4 ou 5 sont particulièrement préférés car les copolymères à blocs obtenus sont des agents dispersants et fluidifiants particulièrement efficaces.

Le bloc B du copolymère à blocs selon l'invention présente généralement une masse molaire moyenne comprise entre 350 et 50000 g/mol (Mw), de préférence entre 500 et 20000 g/mol (Mw).

En général les copolymères à blocs selon l'invention présentent une masse molaire moyenne en poids comprise de 450 à 100000 g/mol de préférence de 2000 à 40000 g/mol (Mw).

Le rapport massique entre blocs A et B est tel que B/(A+B) est de préférence de 0,1 et 5, et de manière encore plus préférée de 0,1 à 1.

Selon l'invention le rapport massique des blocs A et B varie typiquement entre 1/99 et 99/1.

Dans un mode de réalisation, le copolymère à blocs a l'une des formules (SM02), (HD2) ou (HD3) suivantes :

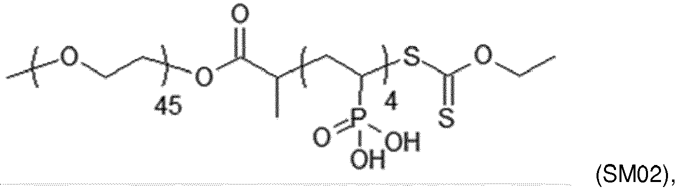

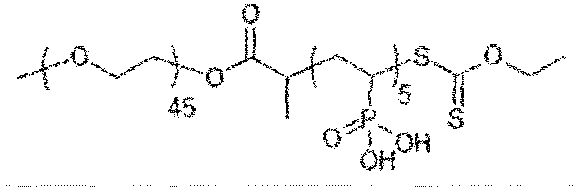

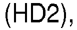

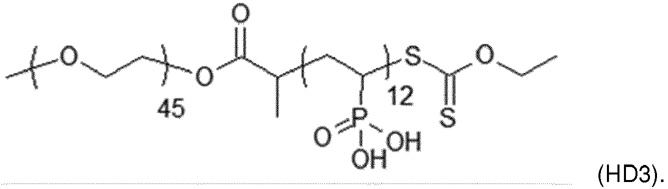

Les copolymères blocs selon l'invention peuvent également être les copolymères blocs obtenus après hydrolyse de la fonction terminale des polymères blocs décrits ci-dessus (SM02, HD2, HD3), notamment les copolymères blocs obtenus après oxydation par H₂O₂, la fonction terminale étant alors par exemple oxydée en groupe sulfone (SO₂R₁₀) ou sulfonique (SO₃⁻ ou SO₃H).

Selon un deuxième objet, l'invention concerne un procédé de préparation du copolymère à blocs décrits ci-dessus.

Selon une première alternative, le procédé selon l'invention comprend les étapes de :
b) fourniture d'un composé de formule (V) suivante : 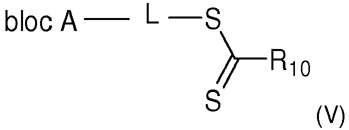 dans laquelle :
   - le bloc A est tel que défini ci-dessus,
   - L est absent ou est un groupe de liaison reliant de façon covalente le bloc A et le groupe -S-(CS)R₁₀,
   - R₁₀ représente un alkyle, un arylalkyle, un aryle, un alkylaryle, un groupe OR₁₁, NR₁₂R₁₃ ou SR₁₄,
   - R₁₁, R₁₂, R₁₃ et R₁₄ représentent indépendamment un alkyle ou un alcényle, un arylalkyle, un aryle, un alkylaryle, étant entendu que R₁₂ et R₁₃ peuvent être liés entre eux pour former un cycle avec l'atome d'azote qui les porte,
c) polymérisation radicalaire contrôlée, ou plusieurs polymérisations radicalaires contrôlées successives, comprenant la mise en contact :
   - du composé de formule (V),
   - d'un monomère B1 ou d'un mélange de monomères à insaturation éthylénique comprenant au moins un monomère B1, où un monomère B1 est un monomère à insaturation éthylénique comprenant au moins une fonction phosphonate, et
   - d'une source de radicaux libres (également appelé amorceur).

Les groupes R₁₀ préférés sont les groupes alkyle, arylalkyle, aryle, alkylaryle ou SR₁₄.

R₁₂ et R₁₃ peuvent être liés entre eux pour former un cycle avec l'atome d'azote qui les porte. Par exemple, le groupe NR₁₂R₁₃ peut représenter un radical pyrrolyle.

L'étape b) du procédé selon l'invention consiste à fournir un composé de formule (V).

Le procédé peut comprendre, préalablement à l'étape b), une étape a) de préparation du composé de formule (V).

Lorsque le bloc A est obtenu par la polymérisation d'un monomère A1 ou d'un mélange de monomères à insaturation éthylénique comprenant au moins un monomère A1, où un monomère A1 est un monomère à insaturation éthylénique et comprenant au moins un groupe poly (oxyde d'alkylène) (par exemple un monomère A1 de formule (II) ou (III)), le composé de formule (V) peut être préparé :
- soit par un procédé comprenant une polymérisation radicalaire contrôlée conduite en mettant en contact :
   - un monomère A1 ou un mélange de monomères à insaturation éthylénique comprenant au moins un monomère A1, où un monomère A1 est un monomère à insaturation éthylénique et comprenant au moins un groupe poly (oxyde d'alkylène)
   - une source de radicaux libres,
   - un agent de contrôle de formule (VI) suivante : 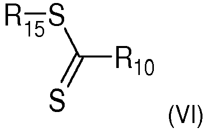 dans laquelle R₁₀ est tel que défini ci-dessus et R₁₅ représente un arylalkyle, un aryle, un alkylaryle ou un alkyle éventuellement substitué par CN ou par COOR₁₆ où R₁₆ représente un alkyle,
- soit par une procédé comprenant les étapes de :
   a1) fournir un polymère dont la chaîne principale comprend à son extrémité un groupe terminal fonctionnel et obtenu par la polymérisation d'un monomère A1 ou d'un mélange de monomères à insaturation éthylénique comprenant au moins un monomère A1, où un monomère A1 est un monomère à insaturation éthylénique et comprenant au moins un groupe poly (oxyde d'alkylène),
   a2) greffer à l'extrémité de la chaîne principale dudit polymère un groupe de formule -S(C=S)R₁₀ où R₁₀ est tel que défini ci-dessus.
Le groupe terminal du polymère mis en oeuvre à l'étape a1) est fonctionnel, ce qui permet de greffer un groupe de formule -S(C=S)R₁₀, soit directement, soit par l'intermédiaire d'un groupe espaceur (« linker » en anglais).

Lorsque le bloc A du copolymère à blocs selon l'invention consiste en un poly (oxyde d'alkylène), notamment en poly(oxyde d'alkylène) de formule (I), l'étape a) de préparation du composé de formule (V) comprend les étapes de :
a3) fourniture d'un poly (oxyde d'alkylène), notamment un poly(oxyde d'alkylène) de formule (I),
a4) greffer à une extrémité dudit poly (oxyde d'alkylène) un groupe de formule -S(C=S)R₁₀ où R₁₀ est tel que défini ci-dessus.

L'étape c) du procédé permet de préparer le bloc B du copolymère à blocs. Le composé de formule (V) sert d'agent de transfert dans la polymérisation radicalaire contrôlée par RAFT de l'étape c).

Lorsque le copolymère à blocs est diblocs, l'étape c) comprend une seule polymérisation radicalaire contrôlée. Lorsque le copolymère à blocs comprend plus de deux blocs, l'étape c) plusieurs polymérisations radicalaires contrôlées successives.

Selon une seconde alternative, le procédé selon l'invention comprend les étapes de :
b') fourniture d'un composé de formule (V') suivante : 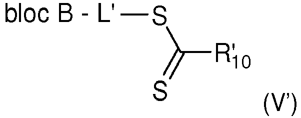 dans laquelle :
   - le bloc B est tel que défini ci-dessus,
   - L' est absent ou est un groupe de liaison reliant de façon covalente le bloc B et le groupe -S-(CS)R'₁₀,
   - R'₁₀ représente un alkyle, un arylalkyle, un aryle, un alkylaryle, un groupe OR'₁₁, NR'₁₂R'₁₃ ou SR'₁₄,
   - R'₁₁, R'₁₂, R'₁₃ et R'₁₄ représentent indépendamment un alkyle ou un alcényle, un arylalkyle, un aryle, un alkylaryle, étant entendu que R'₁₂ et R'₁₃ peuvent être liés entre eux pour former un cycle avec l'atome d'azote qui les porte,
c') polymérisation radicalaire contrôlée, ou plusieurs polymérisations radicalaires contrôlées successives, comprenant la mise en contact :
   - du composé de formule (V'),
   - d'un monomère A1 ou d'un mélange de monomères à insaturation éthylénique comprenant au moins un monomère A1, où un monomère A1 est un monomère à insaturation éthylénique comprenant au moins un groupe poly (oxyde d'alkylène), et
   - d'une source de radicaux libres (également appelé amorceur).

Les groupes R'₁₀ préférés sont les groupes alkyle, arylalkyle, aryle, alkylaryle ou SR'₁₄.

R'₁₂ et R'₁₃ peuvent être liés entre eux pour former un cycle avec l'atome d'azote qui les porte. Par exemple, le groupe NR'₁₂R'₁₃ peut représenter un radical pyrrolyle.

L'étape b') du procédé selon l'invention consiste à fournir un composé de formule (V').

Le procédé peut comprendre, préalablement à l'étape b'), une étape a') de préparation du composé de formule (V').

Le composé de formule (V') peut être préparé :
- soit par un procédé comprenant une polymérisation radicalaire contrôlée conduite en mettant en contact :
   - un monomère B1 ou un mélange de monomères à insaturation éthylénique comprenant au moins un monomère B1, où un monomère B1 est un monomère à insaturation éthylénique et comprenant au moins une fonction phosphonate,
   - une source de radicaux libres,
   - un agent de contrôle de formule (VI') suivante : 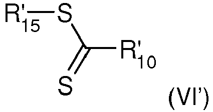 dans laquelle R'₁₀ est tel que défini ci-dessus et R'₁₅ représente un arylalkyle, un aryle, un alkylaryle ou un alkyle éventuellement substitué par CN ou par COOR'₁₆ où R'₁₆ représente un alkyle,
- soit par une procédé comprenant les étapes de :
   a1') fournir un polymère dont la chaîne principale comprend à son extrémité un groupe terminal fonctionnel et obtenu par la polymérisation d'un monomère B1 ou d'un mélange de monomères à insaturation éthylénique comprenant au moins un monomère B1, où un monomère B1 est un monomère à insaturation éthylénique et comprenant au moins une fonction phosphonate,
   a2') greffer à l'extrémité de la chaîne principale dudit polymère un groupe de formule -S(C=S)R'₁₀ où R'₁₀ est tel que défini ci-dessus.
Le groupe terminal du polymère mis en oeuvre à l'étape a1') est fonctionnel, ce qui permet de greffer un groupe de formule -S(C=S)R'₁₀, soit directement, soit par l'intermédiaire d'un groupe espaceur (« linker » en anglais).

L'étape c') du procédé permet de préparer le bloc A du copolymère à blocs. Le composé de formule (V') sert d'agent de transfert dans la polymérisation radicalaire contrôlée par RAFT de l'étape c').

Lorsque le copolymère à blocs est diblocs, l'étape c') comprend une seule polymérisation radicalaire contrôlée. Lorsque le copolymère à blocs comprend plus de deux blocs, l'étape c') plusieurs polymérisations radicalaires contrôlées successives.

Typiquement, à la fin de l'étape c) ou de l'étape c'), on obtient un copolymère à blocs dont l'extrémité est fonctionnalisée par un groupe -S-(C=S)-R₁₀ ou S-(C=S)-R'₁₀ où R₁₀ et R'₁₀ sont tels que défini ci-dessus. Ce copolymère à blocs peut être utilisé tel quel, ou bien le procédé peut comprendre après l'étape c) ou c') une étape d) d'oxydation (par exemple avec de l'eau oxygénée), généralement pour obtenir un copolymère à blocs dont l'extrémité est fonctionnalisée par un groupe SO₃H, SO₃⁻, SO₂R'₁₀ ou SO₂R₁₀.

L'invention concerne également le copolymère à blocs susceptible d'être obtenu par le procédé selon l'invention.

Selon un troisième objet, l'invention concerne l'utilisation du copolymère à blocs tel que défini ci-dessus (ou susceptible d'être obtenu par le procédé défini ci-dessus), comme agent dispersant des particules minérales, comme agent fluidifiant les suspensions de particules minérales, comme promoteur d'adhésion (notamment sur des métaux), comme agent anticorrosion, comme agent ignifugeant, comme agent stabilisant lors du broyage de particules minérales, ou comme agent anti-tartre. Ces copolymères sont utilisés de 0,01 à 10%, de préférence de 0,1% à 5% en poids par rapport au poids de particules minérales.

Les particules minérales peuvent notamment être des charges minérales ou des pigments minéraux (par exemple des oxydes minéraux tels que le dioxyde de titane ou un oxyde de fer), des sels de calcium, en particulier du sulfate de calcium. Ces particules sont généralement suspendues dans un milieu aqueux. Les suspensions de telles particules minérales servent par exemple comme encres, peintures, produits pour l'enduction du papier, ou formulations pour des caoutchoucs ou pour des résines synthétiques ou compositions comprenant un liant hydraulique.

Les copolymères à blocs selon l'invention sont particulièrement utiles en tant qu'agent fluidifiant (également nommé plastifiant ou superplastifiant) pour des compositions comprenant un liant hydraulique tel que du ciment. Les compositions comprenant un liant hydraulique servent à préparer des compositions hydrauliques, telles que des mortiers, bétons et chapes. Généralement, le copolymère à blocs est utilisé dans des proportions de 0,2 à 2% en extrait sec de la composition comprenant un liant hydraulique.

On entend par le terme « liant hydraulique » tout composé ayant la propriété de s'hydrater en présence d'eau et dont l'hydratation permet d'obtenir un solide ayant des caractéristiques mécaniques, notamment un ciment tel qu'un ciment Portland, ciment alumineux, ciment pouzzolanique ou encore un sulfate de calcium anhydre ou semi-hydraté. Le liant hydraulique peut être un ciment selon la norme EN197-1 (2001) et notamment un ciment Portland, des additions minérales, notamment laitiers, ou un ciment comprenant des additions minérales.

On entend par «ciment» un ciment selon la norme EN 197-1 (2001) et notamment un ciment de type CEM I, CEM II, CEM III, CEM IV ou CEM V selon la norme Ciment NF EN 197-1 (2012). Le ciment peut comprendre des additions minérales.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1(2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1 (2012) paragraphe 5.2.5), les calcaires (tels que définis dans la norme Ciment NF EN 197-1(2012) paragraphe 5.2.6) ou encore les fumées de silices (telles que définies dans la norme Ciment NF EN 197-1(2012) paragraphe 5.2.7) ou leurs mélanges. D'autres ajouts, non actuellement reconnus par la norme Ciment NF EN 197-1(2012), peuvent aussi être utilisés. Il s'agit notamment des métakaolins, tels que les métakaolins de type A conformes à la norme NF P 18-513 (août 2012), et des additions siliceuses, telles que les additions siliceuses de minéralogie Qz conformes à la norme NF P 18-509 (septembre 2012).

Sans vouloir être lié à une théorie particulière, les propriétés fluidifiantes des copolymères à blocs selon l'invention pourraient s'expliquer par le fait que le bloc A joue le rôle de bloc stabilisant et que le bloc B joue le rôle de bloc ancreur en s'adsorbant sur les grains de ciment.

Le bloc A a peu, voire pas, d'affinité pour les particules minérales. Les groupes poly (oxyde d'alkylène) du(es) bloc(s) A sont hydrophiles et éviteraient la floculation des grains de ciment par stabilisation stérique.

Les fonctions phosphonate et les éventuelles fonctions carboxylate du bloc B interagissent avec les ions calcium présents à la surface des particules minérales, en particulier du ciment, ce qui provoquerait l'ancrage du(es) bloc(s) B sur les grains de particules minérales.

Selon un quatrième objet, l'invention concerne un adjuvant comprenant un copolymère à blocs tel que défini ci-dessus (ou susceptible d'être obtenu par le procédé défini ci-dessus) et un solvant, de préférence un solvant aqueux, alcoolique ou hydroalcoolique.

La concentration de l'adjuvant en polymère dépend principalement de l'application envisagée. Généralement, l'adjuvant comprend de 1 à 50, de préférence 10 à 30% en poids de polymère par rapport au poids total.

En variante, l'adjuvant peut également être présenté sous forme sèche, notamment en poudre.

La formulation de l'adjuvant peut par ailleurs comprendre d'autres additifs habituels, tels que des agents anti-mousse, des accélérateurs, des retardateurs, des agents hydrofuges, des agents désaérants, des agents modificateurs de viscosité, d'autres dispersants, des entraîneurs d'air ou des stabilisants d'agents anti-mousse.

Selon un cinquième mode de réalisation, l'invention concerne également une composition de particules minérales comprenant au moins un copolymère selon l'invention. Les particules minérales peuvent notamment être des charges minérales ou des pigments minéraux (par exemple des oxydes minéraux tels que le dioxyde de titane ou un oxyde de fer), des sels de calcium, en particulier du sulfate de calcium. Les compositions de particules minérales peuvent notamment être des compositions de liant hydraulique.

Les figures et exemples ci-dessous illustrent l'invention.

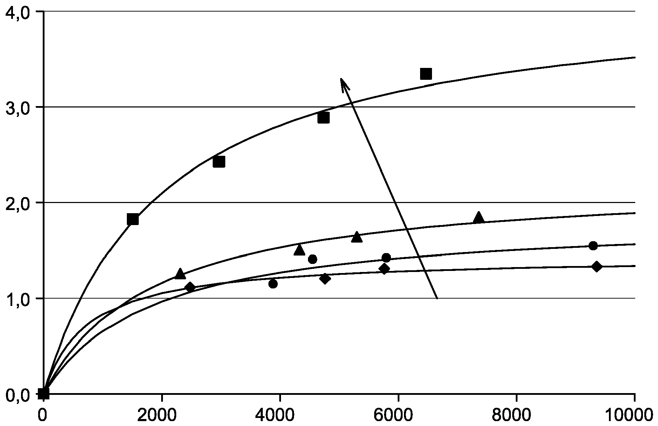

La figure 1 représente l'évolution de la quantité de polymère adsorbé sur les particules de ciment (en mg/g) en fonction de la concentration en polymère libre en mg/L pour un polymère CHRYSO®Fluid Optima100 (comparatif - losanges), HD2 (triangles), HD3 (carrés) et SM02 (ronds). La flèche montre l'augmentation du nombre de fonctions PO₃²⁻.

### Exemple 1 : Synthèse d'un copolymère POE - b - PVPA (acide polyvinyl phosphonique)

Dans cet exemple, le copolymère est diblocs avec :
un bloc A de formule 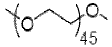
un bloc B obtenu par homopolymérisation de l'acide vinyl phosphonique, les blocs A et B étant liés par une unité de jonction de formule -(C=O)-CHMe-.

1.1. Préparation de l'agent de transfert de formule 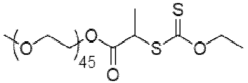 (composé répondant à la formule (V)) (étapes a3) et a4) du procédé selon l'invention).

L'extrémité ω-hydroxy du poly(oxyde d'éthylène) a été modifiée par un groupe xanthate (bromure de 2-bromopropionate). La synthèse a été réalisée à partir d'un homopolymère méthoxypolyéthylène glycol commercial de masse molaire 2012 g.mole⁻¹ (DP = 45) dans le dichlorométhane à température ambiante (20°C) pendant 12h en présence de triéthylamine. Dans un premier temps, on l'a fait réagir avec le composé dibromé de formule suivante 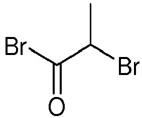 afin d'obtenir un polymère terminé par une fonctionnalité halogène à la place de la fonction hydroxyle, comme illustré sur le schéma 1 ci-dessous.

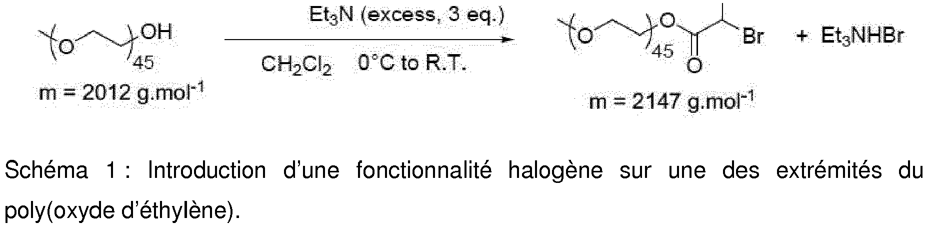

Dans une deuxième étape, on a introduit la fonctionnalité xanthate suivant la réaction du schéma 2.

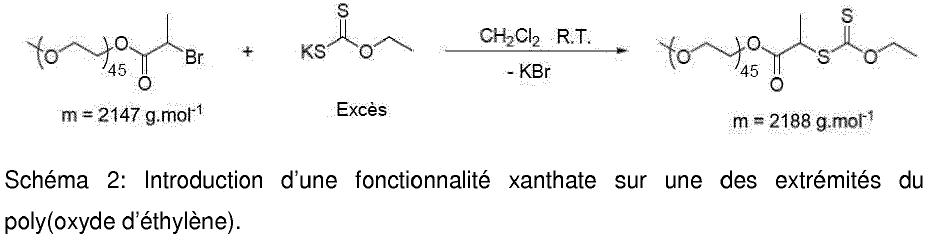

L'analyse spectroscopique RMN ¹H 400 MHz a confirmé la disparition du groupe hydroxyle terminal du poly(oxyde d'éthylène) et l'apparition d'un groupe xanthate.

Le produit se présentait après purification sous la forme d'une poudre de couleur beige. Le rendement total de la synthèse était proche de 80 %. L'analyse RMN 1H a confirmé que tous les polymères poly-éthylèneglycol étaient terminés par la fonctionnalité RAFT. Ce polymère a ensuite été utilisé comme macro-agent RAFT pour polymériser l'acide vinylphosphonique

### 1.2. Polymérisation de l'acide vinylphosphonique (étape c))

La polymérisation de l'acide vinylphosphonique (VPA) a été amorcée par l'AIBA [V50 =2,2' azo bis (2-amidinopropane) dihydrochlorure de formule suivante : 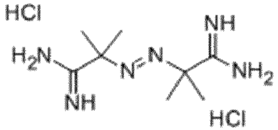 à 65°C dans de l'eau en présence du bloc POE-xanthate (Figure 12).

L'analyse du brut réactionnel par 31P a montré qu'il restait du VPA résiduel en quantité non négligeable. Les conditions opératoires ont été optimisées pour minimiser le taux d'acide vinylphosphonique résiduel.

Trois essais ont été réalisés en utilisant l'agent de transfert préparé en 1.1. comme macro-agent RAFT. La polymérisation du VPA a été réalisée à 65°C dans l'eau. La conversion a atteint la limite de 58% à 24h. Le produit a été purifié par ultrafiltration, pour aboutir à un copolymère possédant moins de 2% de monomère acide vinylphosphonique résiduel.

Les analyses spectroscopiques RMN ¹H et 31P ont confirmé l'obtention d'un bloc acide polyvinylphosphonique de degrés de polymérisation DP respectivement de 4 (SM02 - copolymère à blocs 1), de 5 (HD2- copolymère à blocs 2) et de 12 (HD3 - copolymère à blocs 5).

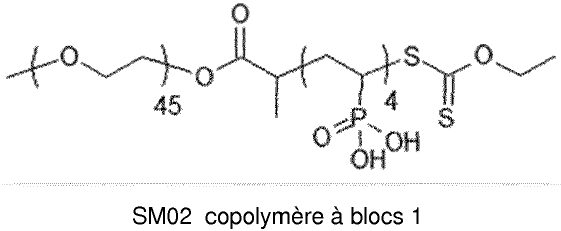

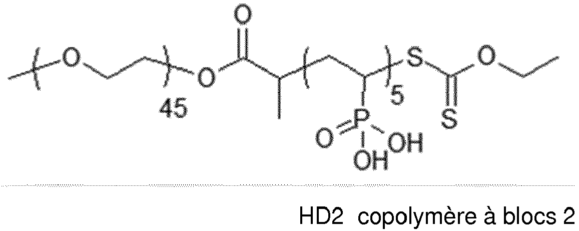

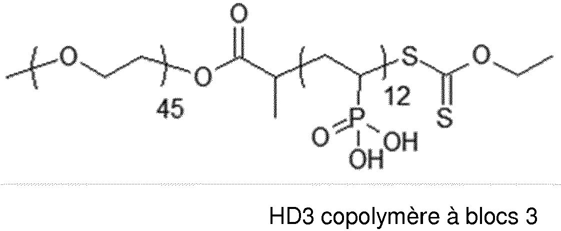

Les copolymères diblocs obtenus ont ensuite été formulés par ajout de 0,5% en poids d'amine oléique à 2 moles d'oxyde d'éthylène (commercialisée sous la dénomination NORAMOX O₂ par CECA) et de 1,2% en poids de tributylphosphate (agent antimousse).

Enfin, les produits ont été dilués avec de l'eau pour obtenir un extrait sec de 20%, puis neutralisés avec de l'hydroxyde de sodium à pH 7. Les dispersants ainsi préparés sont prêts à l'emploi.

### Exemple 2 : Détermination des isothermes d'adsorption des copolymères diblocs de l'exemple 1 à la surface des particules de ciment

Les polymères diblocs de l'exemple 1 ont été testés avec une approche qui combine une étude de rhéologie pendant 2 heures avec des mesures d'adsorption des molécules sur les particules de ciment.

Le rhéomètre Kinexus (Malvern Instruments, UK) a été programmé pour réaliser des mesures de la contrainte en fonction du gradient de cisaillement (courbes d'écoulement) après une déstructuration de la pâte de ciment à 5', 60' et 120'. Entre deux mesures de courbe d'écoulement, l'appareil effectue une courbe de fluage, c'est-à-dire enregistre l'évolution de la viscosité, donc la tendance à la structuration donnée par l'hydratation du ciment, sous une contrainte constante de 4 Pa. En synchronisation avec les courbes d'écoulement, environ 5 ml de jus de ciment ont été extraits par centrifugation de la pâte (2 min à 5000 t/mn) et filtrés (0,2 µm Nylon) afin d'obtenir une solution propre.
Les solutions ont été diluées et analysées par mesure de Carbone Organique Total (COT) pour détecter la quantité du polymère qui reste dans le liquide interstitiel. La différence des valeurs de COT avant et après le contact avec le ciment donne la quantité de polymère adsorbé.
La pâte de ciment a été préparée avec un malaxeur Krups selon les proportions reportées dans le tableau 1.

**Tableau 1 : Composition de la pâte (g ± 0,02)**

| CEM I 52,2N Le Havre | Filler Erbray | Eau | Sable 0/0,160 mm | Sable 0/0,315 mm |
|---|---|---|---|---|
| 254,55 | 145,45 | 167,35 | 36,15 | 163,85 |

Les molécules diblocs ont été dosées entre 0,8% et 2% sur la masse de liant total (ciment+filler). Ces dosages différents ont permis de tracer les valeurs de polymère adsorbé en fonction de la concentration en polymère libre, donc d'obtenir une isotherme d'adsorption.

Les courbes obtenues à la figure 1 correspondent aux isothermes d'adsorption des polymères sur les particules de ciment. Elles montrent très clairement que l'HD3, avec 12 motifs d'acide vinylphosphonique, présente une plus forte affinité pour les grains de ciment que l'HD2 et SM02 qui ne possèdent respectivement que 5 et 4 motifs d'acide phosphonique. CHRYSO®Fluid Optima 100 est le polymère le moins adsorbé.

### Exemple 3 : Utilisation des copolymères diblocs de l'exemple 1 dans une formulation de pâte cimentaire

### Composition de la formulation d'évaluation

Les copolymères diblocs de l'exemple 1 ont été évalués selon la formulation suivante :

| | |
|---|---|
| CEM I 52,5 N Le Havre | 624,9 g |
| ERBRAY filler calcaire | 412,1 g |
| FULCHIRON (sablon) | 587,7 g |
| Sable normalisé AFNOR | 1350 g |
| Eau totale | 375,1 g |

Le taux de copolymères est exprimé en % par rapport au liant total (filler + ciment = 1037 g).

### Mode opératoire pour la préparation du mortier

Le mortier a été préparé selon la procédure suivante : on a introduit dans le bol d'un malaxeur PERRIER les deux sables, normalisé et FULCHIRON. Après malaxage des sables pendant 30 secondes à une vitesse d'environ 140 tr/mn, on a ajouté, en l'espace de 15 secondes, l'eau de pré-mouillage qui représentait 1/3 de l'eau totale à introduire. Le mélange a été poursuivi pendant 15 secondes avant de laisser reposer la masse pendant 4 minutes. Ensuite on a introduit le ciment et le filler calcaire (origine ERBRAY fourni par la Société MEAC) puis le mélange a été poursuivi pendant 1 minute avant d'ajouter le reste de l'eau de gâchage ainsi que la totalité de l'adjuvant en l'espace de 30 secondes. Le malaxeur a ensuite été arrêté quelques instants pour racler les bords du bol de malaxage afin d'avoir une masse bien homogène puis le mélange a été poursuivi pendant encore 1 minute à vitesse rapide de 280 t/mn.

### Critère d'évaluation

L'évaluation des propriétés applicatives des copolymères à blocs a été effectuée à l'aide de mesures rhéologiques. Ainsi l'ouvrabilité des compositions hydrauliques formulées en présence de ces copolymères diblocs a été estimée par mesure du diamètre d'étalement (slump flow-diamètre de la flaque formée après écoulement). L'étalement a été mesuré à 5, 30, 60, 90 et 120 mn selon 2 diamètres à 90°. Les essais ont été réalisés à 20°C.

### Résultats

Les mesures d'étalement des pâtes cimentaires sont présentées dans le tableau 2.

**Tableau 2 : Etalement du mortier en fonction de l'adjuvant.**

| Adjuvant | Optima 100 (référence) | HD2 |
|---|---|---|
| Dosage (%) | 1,10 | 1,10 |
| Etalement à 5min | 290 | 410 |

A l'examen du tableau 2, on constate que le copolymère di bloc poly(oxyde d'éthylène-b-acide polyvinylphosphonique) HD2 présente, à dosage égal, un pouvoir de fluidification bien supérieur à celui du témoin Optima 100.

## Revendications

1. Procédé de préparation d'un copolymère à blocs comprenant :
- au moins un bloc A ne comprenant pas de groupe phosphonate, et comprenant au moins un groupe poly (oxyde d'alkylène), et
- au moins un bloc B obtenu par la polymérisation d'un monomère B1 ou d'un mélange de monomères à insaturation éthylénique comprenant au moins un monomère B1, où un monomère B1 est un monomère à insaturation éthylénique comprenant au moins une fonction phosphonate
comprenant les étapes de :
b) fourniture d'un composé de formule (V) suivante : 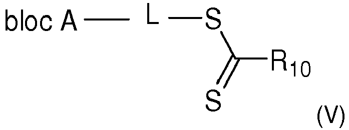 dans laquelle :
- le bloc A est un bloc A ne comprenant pas de groupe phosphonate, et comprenant au moins un groupe poly (oxyde d'alkylène),
- L est absent ou est un groupe de liaison reliant de façon covalente le bloc A et le groupe -S-(CS)R₁₀,
- R₁₀ représente un alkyle, un arylalkyle, un aryle, un alkylaryle ou un groupe OR₁₁, NR₁₂R₁₃ ou SR₁₄,
- R₁₁, R₁₂, R₁₃ et R₁₄ représentent indépendamment un alkyle ou un alcényle, un arylalkyle, un aryle, un alkylaryle, étant entendu que R₁₂ et R₁₃ peuvent être liés entre eux pour former un cycle avec l'atome d'azote qui les porte,
c) polymérisation radicalaire contrôlée, ou plusieurs polymérisations radicalaires contrôlées successives, comprenant la mise en contact :
- du composé de formule (V),
- d'un monomère B1 ou d'un mélange de monomères à insaturation éthylénique comprenant au moins un monomère B1, où un monomère B1 est un monomère à insaturation éthylénique comprenant au moins une fonction phosphonate, et
- d'une source de radicaux libres.

2. Procédé de préparation d'un copolymère à blocs comprenant :
- au moins un bloc A ne comprenant pas de groupe phosphonate, et comprenant au moins un groupe poly (oxyde d'alkylène), et
- au moins un bloc B obtenu par la polymérisation d'un monomère B1 ou d'un mélange de monomères à insaturation éthylénique comprenant au moins un monomère B1, où un monomère B1 est un monomère à insaturation éthylénique comprenant au moins une fonction phosphonate,
comprenant les étapes de :
b') fourniture d'un composé de formule (V') suivante : 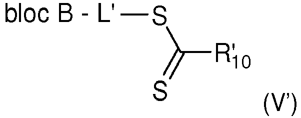 dans laquelle :
- le bloc B est un bloc obtenu par la polymérisation d'un monomère B1 ou d'un mélange de monomères à insaturation éthylénique comprenant au moins un monomère B1, où un monomère B1 est un monomère à insaturation éthylénique comprenant au moins une fonction phosphonate,
- L' est absent ou est un groupe de liaison reliant de façon covalente le bloc B et le groupe -S-(CS)R'₁₀,
- R'₁₀ représente un alkyle, un arylalkyle, un aryle, un alkylaryle, un groupe OR'₁₁, NR'₁₂R'₁₃ ou SR'₁₄,
- R'₁₁, R'₁₂, R'₁₃ et R'₁₄ représentent indépendamment un alkyle ou un alcényle, un arylalkyle, un aryle, un alkylaryle, étant entendu que R'₁₂ et R'₁₃ peuvent être liés entre eux pour former un cycle avec l'atome d'azote qui les porte,
c') polymérisation radicalaire contrôlée, ou plusieurs polymérisations radicalaires contrôlées successives, comprenant la mise en contact :
- du composé de formule (V'),
- d'un monomère A1 ou d'un mélange de monomères à insaturation éthylénique comprenant au moins un monomère A1, où un monomère A1 est un monomère à insaturation éthylénique comprenant au moins un groupe poly (oxyde d'alkylène), et
- d'une source de radicaux libres.

3. Procédé de préparation selon la revendication 1 ou 2, dans lequel le monomère B1 a la formule (IV) suivante : 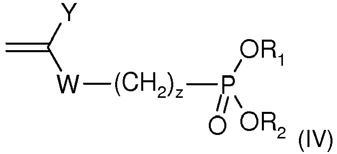 dans laquelle :
- Y représente :
- un alkyle linéaire ou ramifié ayant de 1 à 6 atomes de carbone,
- un groupe -W-(CH₂)_{z}-P(=O)(OR₁)(OR₂), ou
- un groupe (CH₂)ₓ-R₂₅, où x représente un nombre entier compris entre 0 et 4 et R₂₅ représente un atome d'hydrogène, un phényle ou un groupe -CN ou -CO₂R₉,
- z représente un nombre entier compris entre 0 et 4,
- W représente une liaison simple ou un groupe -COO- ou -CONH-, étant entendu que lorsque z représente 0, W représente une liaison simple,
- R₁, R₂ et R₉ représentent indépendamment H, un phényle ou un alkyle linéaire ou ramifié ayant de 1 à 6 atomes de carbone et éventuellement substitué par un ou plusieurs halogènes.

4. Procédé de préparation selon la revendication 3, dans lequel W représente une liaison simple et z représente 0.

5. Procédé de préparation selon la revendication 4, dans lequel le monomère B1 est l'acide vinyl phosphonique.

6. Procédé de préparation selon l'une quelconque des revendications 1 à 5, dans lequel, lors de l'étape c) ou b'), le mélange de monomères à insaturation éthylénique comprenant au moins un monomère B1 comprend :
- au moins un monomère B1 à insaturation éthylénique comprenant au moins une fonction phosphonate, et
- au moins un monomère B2 choisi parmi l'acide acrylique, l'acide méthacrylique, un monomère à insaturation éthylénique comprenant une fonction aminométhylène bisphosphonique ou gem-bisphosphonique ou un monomère à insaturation éthylénique comprenant une fonction sulfonique ou sulfonate.

7. Procédé de préparation selon l'une quelconque des revendications 1 et 3 à 5, dans lequel le copolymère à blocs comprend un bloc A consistant en un poly (oxyde d'alkylène),
le procédé comprenant, préalablement à l'étape b), une étape a) de préparation du composé de formule (V) comprenant les étapes de :
a3) fourniture d'un poly (oxyde d'alkylène),
a4) greffer à une extrémité dudit poly (oxyde d'alkylène) un groupe de formule -S(C=S)R₁₀ où R₁₀ est tel que défini à la revendication 1.

8. Procédé de préparation selon l'une quelconque des revendications 1 à 7, comprenant, après l'étape c) ou c'), une étape d) d'oxydation.

9. Copolymère à bloc susceptible d'être obtenu par le procédé selon l'une quelconque des revendications 3 à 5.

10. Copolymère à blocs comprenant :
- au moins un bloc A ne comprenant pas de groupe phosphonate, et comprenant au moins un groupe poly (oxyde d'alkylène), et
- au moins un bloc B obtenu par la polymérisation d'un monomère B1 ou d'un mélange de monomères à insaturation éthylénique comprenant au moins 30% en poids d'un monomère B1,
le monomère B1 ayant la formule (IV) suivante : 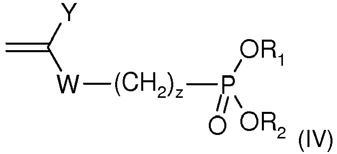
dans laquelle :
- Y représente :
- un alkyle linéaire ou ramifié ayant de 1 à 6 atomes de carbone,
- un groupe -W-(CH₂)_{z}-P(=O)(OR₁)(OR₂), ou
- un groupe (CH₂)ₓ-R₂₅, où x représente un nombre entier compris entre 0 et 4 et R₂₅ représente un atome d'hydrogène, un phényle ou un groupe -CN ou -CO₂R₉,
- z représente un nombre entier compris entre 0 et 4,
- W représente une liaison simple ou un groupe -COO- ou -CONH-, étant entendu que lorsque z représente 0, W représente une liaison simple,
- R₁, R₂ et R₉ représentent indépendamment H, un phényle ou un alkyle linéaire ou ramifié ayant de 1 à 6 atomes de carbone et éventuellement substitué par un ou plusieurs halogènes.

11. Copolymère à blocs selon la revendication 10, comprenant au moins un bloc B obtenu par la polymérisation d'un mélange de monomères à insaturation éthylénique comprenant au moins 50% en poids du monomère B1.

12. Copolymère à blocs selon l'une quelconque des revendications 9 à 11, dans lequel, dans chaque bloc A, chaque groupe poly (oxyde d'alkylène) a indépendamment la formule (I) suivante :
R₃-(O-R₄)ₙ- (I)
dans laquelle :
- R₃ est un atome d'hydrogène ou un groupe hydrocarboné monovalent comportant de 1 à 12 atomes de carbone et éventuellement un ou plusieurs hétéroatomes,
- n représente un nombre entier de 2 à 500, de préférence de 3 à 200,
- chaque R₄ représente indépendamment un alkylène linéaire ou ramifié comprenant de 2 à 6 atomes de carbone.

13. Copolymère à blocs selon la revendication 12, dans lequel, dans chaque bloc A, chaque R₄ représente indépendamment un groupe -CH₂-CH₂-, -CHCH₃-CH₂-, -CH₂-CHCH₃- ou -CH₂-CH₂-CH₂-, de préférence un groupe -CH₂-CH₂-.

14. Copolymère à blocs selon l'une quelconque des revendications 9 à 13, dans lequel le bloc A est obtenu par la polymérisation d'un monomère A1 ou d'un mélange de monomères à insaturation éthylénique comprenant au moins un monomère A1, où un monomère A1 est un monomère à insaturation éthylénique et comprenant au moins un groupe poly (oxyde d'alkylène).

15. Copolymère à blocs selon la revendication 14, dans lequel le monomère A1 a la formule (II) suivante : 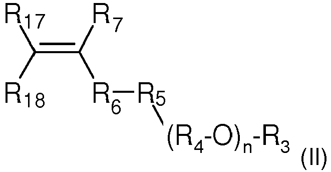 dans laquelle :
- n, R₃ et R₄ sont tels que définis à la revendication 12,
- R₅ représente -CH₂-, -O- ou -NR₈- où R₈ représente H ou un alkyle linéaire ou ramifié comprenant de 1 à 6 atomes de carbone, de préférence H ou Me,
- R₆ est absent ou représente -(C=O)- ou -(CH₂)_{q}-, où q représente 1, 2 ou 3,
- R₇ représente H ou Me, et
- R₁₇ et R₁₈ représentent indépendamment H ou Me.

16. Copolymère à blocs selon l'une quelconque des revendications 9 à 15, dans lequel chaque bloc A du copolymère à blocs est obtenu par polymérisation d'un mélange de monomères comprenant moins de 10% en poids de monomères comprenant un groupe ionique.

17. Copolymère à blocs selon l'une quelconque des revendications 9 à 13, dans lequel le bloc A du copolymère à blocs selon l'invention consiste en un poly (oxyde d'alkylène), notamment en un poly(oxyde d'alkylène) de formule (I) telle que définie à la revendication 12.

18. Copolymère à blocs selon l'une quelconque des revendications 9 à 17, dans lequel le bloc B présente un degré de polymérisation de 2 à 50, de préférence de 3 à 15.

19. Copolymère à blocs selon l'une quelconque des revendications 9 à 18 présentant une masse moléculaire moyenne en poids de 450 à 100000 g/mol, de préférence de 2000 à 40000 g/mol tel que déterminé par SEC («size exclusion chromatography) en équivalent de poly(oxyde d'éthylène) étalon.

20. Utilisation du copolymère à blocs selon l'une quelconque des revendications 9 à 19, comme agent dispersant des particules minérales, comme agent fluidifiant les suspensions de particules minérales, comme promoteur d'adhésion, comme agent anticorrosion, comme agent ignifugeant, comme agent stabilisant lors du broyage de particules minérales, ou comme agent anti-tartre.

21. Utilisation selon la revendication 20 du copolymère à blocs selon l'une quelconque des revendications 9 à 19 comme agent fluidifiant pour des compositions comprenant un liant hydraulique.

22. Composition de particules minérales comprenant un copolymère selon l'une quelconque des revendications 9 à 19.

## Patentansprüche

1. Verfahren zur Herstellung eines Blockcopolymers, umfassend:
- mindestens einen Block A, der keine Phosphonatgruppe umfasst, und mindestens eine Poly(alkylenoxid)-Gruppe umfasst,
- mindestens einen Block B, erhalten durch die Polymerisation eines Monomers B1 oder einer Mischung ethylenisch ungesättigter Monomere, die mindestens ein Monomer B1 umfasst, wo ein Monomer B1 ein ethylenisch ungesättigtes Monomer ist, umfassend mindestens eine Phosphonatfunktion
umfassend die Schritte:
b) Bereitstellen einer Verbindung der folgenden Formel (V): 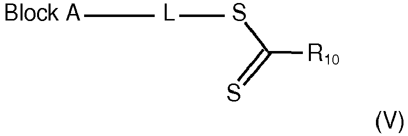 in welcher:
- der Block A ein Block A ist, der keine Phosphonatgruppe umfasst, und mindestens eine Poly(alkylenoxid)-Gruppe umfasst,
- L nicht vorliegt oder eine Verbindungsgruppe ist, die auf kovalente Weise den Block A und die Gruppe -S-(CS)R₁₀ verbindet,
- R₁₀ ein Alkyl, ein Arylalkyl, ein Aryl, ein Alkylaryl oder eine Gruppe OR₁₁, NR₁₂R₁₃ oder SR₁₄ darstellt,
- R₁₁, R₁₂, R₁₃ und R₁₄ unabhängig ein Alkyl oder ein Alkenyl, ein Arylalkyl, ein Aryl, ein Alkylaryl darstellen, vorausgesetzt, dass R₁₂ und R₁₃ miteinander verbunden werden können, um einen Ring mit dem sie tragenden Stickstoffatom zu bilden,
c) kontrollierte radikalische Polymerisation, oder mehrere aufeinanderfolgende, kontrollierte radikalische Polymerisationen, umfassend das Inkontaktbringen:
- der Verbindung der Formel (V),
- eines Monomers B1 oder einer Mischung ethylenisch ungesättigter Monomere, die mindestens ein Monomer B1 umfasst, wo ein Monomer B1 ein ethylenisch ungesättigtes Monomer ist, umfassend mindestens eine Phosphonatfunktion,
- einer Quelle freier Radikale.

2. Verfahren zur Herstellung eines Blockcopolymers, umfassend:
- mindestens einen Block A, der keine Phosphonatgruppe umfasst, und mindestens eine Poly(alkylenoxid)-Gruppe umfasst,
- mindestens einen Block B, erhalten durch die Polymerisation eines Monomers B1 oder einer Mischung ethylenisch ungesättigter Monomere, die mindestens ein Monomer B1 umfasst, wo ein Monomer B1 ein ethylenisch ungesättigtes Monomer ist, umfassend mindestens eine Phosphonatfunktion,
umfassend die Schritte:
b') Bereitstellen einer Verbindung der folgenden Formel (V'): 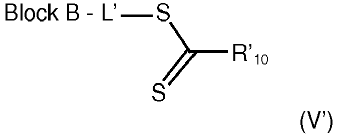 in welcher:
- der Block B ein Block ist, erhalten durch die Polymerisation eines Monomers B1 oder einer Mischung ethylenisch ungesättigter Monomere, die mindestens ein Monomer B1 umfasst, wo ein Monomer B1 ein ethylenisch ungesättigtes Monomer ist, umfassend mindestens eine Phosphonatfunktion,
- L nicht vorliegt oder eine Verbindungsgruppe ist, die auf kovalente Weise den Block B und die Gruppe -S-(CS)R'₁₀ verbindet,
- R'₁₀ ein Alkyl, ein Arylalkyl, ein Aryl, ein Alkylaryl oder eine Gruppe OR'₁₁, NR'₁₂R'₁₃ oder SR'₁₄ darstellt,
- R'₁₁, R'₁₂, R'₁₃ und R'₁₄ unabhängig ein Alkyl oder ein Alkenyl, ein Arylalkyl, ein Aryl, ein Alkylaryl darstellen, vorausgesetzt, dass R'₁₂ und R'₁₃ miteinander verbunden werden können, um einen Ring mit dem sie tragenden Stickstoffatom zu bilden,
c') kontrollierte radikalische Polymerisation, oder mehrere aufeinanderfolgende, kontrollierte radikalische Polymerisationen, umfassend das Inkontaktbringen:
- der Verbindung der Formel (V'),
- eines Monomers A1 oder einer Mischung ethylenisch ungesättigter Monomere, die mindestens ein Monomer A1 umfasst, wo ein Monomer A1 ein ethylenisch ungesättigtes Monomer ist, umfassend mindestens eine Poly(alkylenoxid)-Gruppe, und
- eine Quelle freier Radikale.

3. Herstellungsverfahren nach Anspruch 1 oder 2, in welchem das Monomer B1 die folgende Formel (IV) hat: 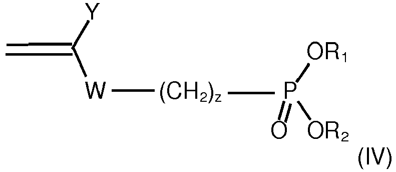 in welcher:
- Y Folgendes darstellt:
- ein lineares oder verzweigtes Alkyl mit 1 bis 6 Kohlenstoffatomen,
- eine Gruppe -W-(CH₂)_{z}-P(=O)(OR₁)(OR₂), oder
- eine Gruppe (CH2)ₓ-R₂₅, in der x eine ganze Zahl zwischen 0 und 4 darstellt und R₂₅ ein Wasserstoffatom, ein Phenyl oder eine Gruppe -CN oder -CO₂R₉ darstellt,
- z eine ganze Zahl zwischen 0 und 4 darstellt,
- W eine einfache Verbindung oder eine Gruppe-COO- oder -CONH- darstellt, wobei, wenn z gleich 0 ist, W eine einfache Verbindung darstellt,
- R₁, R₂ und R₉ unabhängig H, ein Phenyl oder ein lineares oder verzweigtes Alkyl mit 1 bis 6 Kohlenstoffatomen und gegebenenfalls mit einem oder mehreren Halogenen substituiert, darstellen.

4. Herstellungsverfahren nach Anspruch 3, in welchem W eine einfache Verbindung darstellt und z gleich 0 ist.

5. Herstellungsverfahren nach Anspruch 4, in welchem das Monomer B1 die Vinylphosphonsäure ist.

6. Herstellungsverfahren nach einem der Ansprüche 1 bis 5, in welchem während des Schritts c) oder b') die mindestens ein Monomer B1 umfassende Mischung ethylenisch ungesättigter Monomere Folgendes umfasst:
- mindestens ein ethylenisch ungesättigtes Monomer B1 umfassend mindestens eine Phosphonatfunktion, und
- mindestens ein Monomer B2, ausgewählt aus der Acrylsäure, der Methacrylsäure, wobei ein ethylenisch ungesättigtes Monomer eine bisphosphonische oder gem-bisphosphonische Aminomethylenfunktion oder ein ethylenisches ungesättigtes Monomer umfassend eine Sulfon- oder Sulfonatfunktion umfasst.

7. Herstellungsverfahren nach einem der vorstehenden Ansprüche 1 und 3 bis 5, in welchem das Blockcopolymer einen Block A umfasst, bestehend aus einem Poly(alkylenoxid), wobei das Verfahren vor dem Schritt b) einen Schritt a) zur Herstellung der Verbindung der Formel (V) umfasst, umfassend die Schritte:
a3) Bereitstellen eines Poly(alkylenoxids),
a4) Pfropfen auf einem Ende des besagten Poly(alkylenoxids) einer Formelgruppe -S(C=S)R₁₀, in der R₁₀ wie im Anspruch 1 definiert ist.

8. Herstellungsverfahren nach einem der vorstehenden Ansprüche 1 bis 7, das nach dem Schritt c) oder c') einen Schritt d) der Oxydation umfasst.

9. Blockcopolymer, das erhalten werden kann durch das Verfahren nach einem der Ansprüche 3 bis 5.

10. Blockcopolymer, umfassend:
- mindestens einen Block A, der keine Phosphonatgruppe umfasst, und mindestens eine Poly(alkylenoxid)-Gruppe umfasst,
- mindestens einen Block B, erhalten durch die Polymerisation eines Monomers B1 oder einer Mischung ethylenisch ungesättigter Monomere, die mindestens 30 Gewichts-% eines Monomers B1 umfasst,
wobei das Monomer B1 die folgende Formel (IV) hat: 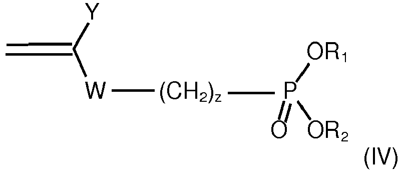
in welcher:
- Y Folgendes darstellt:
- ein lineares oder verzweigtes Alkyl mit 1 bis 6 Kohlenstoffatomen,
- eine Gruppe -W-(CH₂)_{z}-P(=O)(OR₁)(OR₂), oder
- eine Gruppe (CH2)ₓ-R₂₅, in der x eine ganze Zahl zwischen 0 und 4 darstellt und R₂₅ ein Wasserstoffatom, ein Phenyl oder eine Gruppe -CN oder-CO₂R₉ darstellt,
- z eine ganze Zahl zwischen 0 und 4 darstellt,
- W eine einfache Verbindung oder eine Gruppe-COO- oder-CONH- darstellt, wobei wenn z gleich 0 ist, W eine einfache Verbindung darstellt,
- R₁, R₂ und R₉ unabhängig H, ein Phenyl oder ein lineares oder verzweigtes Alkyl mit 1 bis 6 Kohlenstoffatomen und gegebenenfalls mit einem oder mehreren Halogenen substituiert, darstellen.

11. Blockcopolymer nach Anspruch 10, umfassend mindestens einen Block B, erhalten durch die Polymerisation einer Mischung ethylenisch ungesättigter Monomere, die mindestens 50 Gewichts-% des Monomers B1 umfasst.

12. Blockcopolymer nach einem der vorstehenden Ansprüche 9 bis 11, in welchem in jedem Block A jede Poly(Alkylenoxid)-Gruppe unabhängig die folgende Formel (I) hat:
R₃-(O-R₄)ₙ- (I)
in welcher:
- R₃ ein Wasserstoffatom oder eine einwertige Kohlenwasserstoffgruppe ist, umfassend 1 bis 12 Kohlenstoffatome und eventuell einen oder mehrere Heteroatome,
- n eine ganze Zahl von 2 bis 500 darstellt, vorzugsweise von 3 bis 200,
- jedes R₄ unabhängig ein lineares oder verzweigtes Alkylen, das 2 bis 6 Kohlenstoffatome umfasst, darstellt.

13. Blockcopolymer nach Anspruch 12, in welchem in jedem Block A jedes R₄ unabhängig eine Gruppe -CH₂-CH₂-, -CHCH₃-CH₂-, -CH₂-CHCH₃- oder -CH₂-CH₂-CH₂- darstellt, vorzugsweise eine Gruppe -CH₂-CH₂-.

14. Blockcopolymer nach einem der vorstehenden Ansprüche 9 bis 13, in welchem der Block A erhalten wird durch die Polymerisation eines Monomers A1 oder einer Mischung ethylenisch ungesättigter Monomere, die mindestens ein Monomer A1 umfasst, wo ein Monomer A1 ein ethylenisch ungesättigtes Monomer ist und mindestens eine Poly(alkylenoxid)-Gruppe umfasst.

15. Blockcopolymer nach Anspruch 14, in welchem das Monomer A1 die folgende Formel (II) hat: 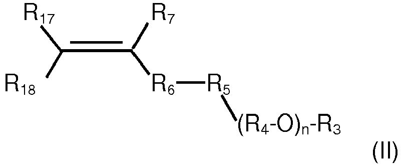 in welcher:
- n, R₃ und R₄ wie im Anspruch 12 definiert sind,
- R₅ -CH₂-, -O- oder -NR₈- darstellt, wo R₈ H oder ein lineares oder verzweigtes Alkyl, das 1 bis 6 Kohlenstoffatome umfasst, darstellt, vorzugsweise H oder Me,
- R₆ nicht vorliegt oder-(C=O)- oder-(CH₂)_{q}- darstellt, wo q 1, 2 oder 3 darstellt,
- R₇ H oder Me darstellt,
- R₁₇ und R₁₈ unabhängig H oder Me darstellen.

16. Blockcopolymer nach einem der vorstehenden Ansprüche 9 bis 15, in welchem jeder Block A des Blockcopolymers erhalten wird durch Polymerisation einer Mischung von Monomeren, die mindestens 10 Gewichts-% von Monomeren, die eine ionische Gruppe enthalten, umfassen.

17. Blockcopolymer nach einem der vorstehenden Ansprüche 9 bis 13, in welchem der Block A des erfindungsgemäßen Blockcopolymers aus einem Poly(alkylenoxid) besteht, insbesondere aus einem Poly(alkylenoxid) der Formel (I) wie im Anspruch 12 definiert.

18. Blockcopolymer nach einem der vorstehenden Ansprüche 9 bis 17, in welchem der Block B einen Polymerisationsgrad von 2 bis 50 aufweist, vorzugsweise von 3 bis 15.

19. Blockcopolymer nach einem der vorstehenden Ansprüche 9 bis 18, der ein Molekulargewicht im Gewichtsmittel von 450 bis 100.000 g/mol aufweist, vorzugsweise von 2.000 bis 40.000 g/mol wie durch SEC ("size exclusion chromatography") als Äquivalent des Poly(ethylenoxid)-Standard festgelegt.

20. Verwendung des Blockcopolymers nach einem der vorstehenden Ansprüche 9 bis 19 als Dispersionsmittel der Mineralpartikel, als Verflüssigungsmittel der Suspensionen von Mineralpartikeln, als haftverbesserndes Mittel, als Rostschutzmittel, als flammhemmendes Mittel, als stabilisierendes Mittel bei der Zerkleinerung der Mineralpartikel, oder als Antizahnsteinmittel.

21. Verwendung nach Anspruch 20 des Blockcopolymers nach einem der Ansprüche 9 bis 19 als Verflüssigungsmittel für Zusammensetzungen, die ein hydraulisches Bindemittel enthalten.

22. Zusammensetzung von Mineralpartikeln, umfassend ein Copolymer nach einem der Ansprüche 9 bis 19.

## Claims

1. A method for preparing a block copolymer comprising:
- at least one block A not comprising any phosphonate group, and comprising at least one poly (alkylene oxide) group, and
- at least one block B obtained by polymerization of a monomer B1 or of a mixture of monomers with ethylenic unsaturation comprising at least one monomer B1, wherein a monomer B1 is a monomer with ethylenic unsaturation comprising at least one phosphonate function
comprising the steps of:
b) providing a compound of the following formula (V): 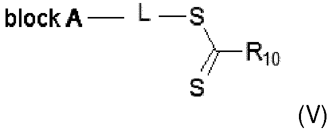 wherein:
- block A is a block A not comprising any phosphonate group, and comprising at least one poly (alkylene oxide) group,
- L is absent or is a binding group connecting covalently the block A and the group -S-(CS)R₁₀,
- R₁₀ represents an alkyl, an arylalkyl, an aryl, an alkylaryl or a group OR₁₁, NR₁₂R₁₃ or SR₁₄,
- R₁₁, R₁₂, R₁₃ and R₁₄ represent independently an alkyl or an alkenyl, an arylalkyl, an aryl, an alkylaryl, wherein R₁₂ and R₁₃ may be connected together in order to form a ring with the nitrogen atom bearing them,
c) controlled radical polymerization, or several successive controlled radical polymerizations, comprising the putting into contact:
- of the compound of formula (V),
- of a monomer B1 or a mixture of monomers with ethylenic unsaturation comprising at least one monomer B1, wherein a monomer B1 is a monomer with ethylenic unsaturation comprising at least one phosphonate function, and
- of a source of free radicals.

2. A method for preparing a block copolymer comprising:
- at least one block A not comprising any phosphonate group, and comprising at least one poly (alkylene oxide) group, and
- at least one block B obtained by polymerization of a monomer B1 or of a mixture of monomers with ethylenic unsaturation comprising at least one monomer B1, wherein a monomer B1 is a monomer with ethylenic unsaturation comprising at least one phosphonate function,
comprising the steps of:
b') providing a compound of the following formula (V'): 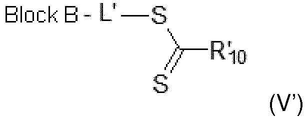 wherein:
- block B is a block obtained by polymerization of a monomer B1 or of a mixture of monomers with ethylenic unsaturation comprising at least one monomer B1, wherein a monomer B1 is a monomer with ethylenic unsaturation comprising at least one phosphonate function,
- L' is absent or is a binding group connecting covalently block B and the group -S-(CS)R'₁₀,
- R'₁₀ represents an alkyl, an arylalkyl, an aryl, an alkylaryl, a group OR'₁₁, NR'₁₂R'₁₃ or SR'₁₄,
- R'₁₁, R'₁₂, R'₁₃ and R'₁₄ represent independently an alkyl or an alkenyl, an arylalkyl, an aryl, an alkylaryl, wherein R'₁₂ and R'₁₃ may be bound together in order to form a ring with the nitrogen atom bearing them,
c') a controlled radical polymerization, or several successive controlled radical polymerizations, comprising the putting into contact:
- of the compound of formula (V'),
- of a monomer A1 or of a mixture of monomers with ethylenic unsaturation comprising at least one monomer A1, wherein a monomer A1 is a monomer with ethylenic unsaturation comprising at least one poly (alkylene oxide) group, and
- of a source of free radicals.

3. The preparation method according to claim 1 or 2, wherein the monomer B1 has the following formula (IV): 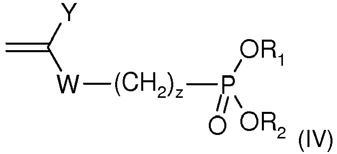 wherein:
- Y represents:
- a linear or branched alkyl having from 1 to 6 carbon atoms,
- a group -W-(CH₂)_{z}-P(=O)(OR₁)(OR₂), or
- a group (CH₂)ₓ-R₂₅, wherein x represents an integer comprised between 0 and 4 and R₂₅ represents a hydrogen atom, a phenyl or a group -CN or -CO₂R₉,
- z represents an integer comprised between 0 and 4,
- W represents a simple bond or a group -COO- or -CONH-, wherein when z represents 0, W represents a simple bond,
- R₁, R₂ and R₉ represent independently H, a phenyl or a linear or branched alkyl having from 1 to 6 carbon atoms and optionally substituted with one or several halogens.

4. The preparation method according to claim 3, wherein W represents a simple bond and z represents 0.

5. The preparation method according to claim 4, wherein the monomer B1 is vinyl phosphonic acid.

6. The preparation method according to any of claims 1 to 5, wherein, during step c) or b'), the mixture of monomers with ethylenic unsaturation comprising at least one monomer B1 comprises:
- at least one monomer B1 with ethylenic unsaturation comprising at least one phosphonate function, and
- at least one monomer B2 selected from acrylic acid, methacrylic acid, a monomer with ethylenic unsaturation comprising an aminomethylene bisphosphonic or gem-bisphosphonic function or a monomer with ethylenic unsaturation comprising a sulfonic or sulfonate function.

7. The preparation method according to any of claims 1 and 3 to 5, wherein the block copolymer comprises a block A consisting in a poly (alkylene oxide),
the method comprising, prior to step b), a step a) for preparing a compound of formula (V) comprising the steps of:
a3) providing a poly(alkylene oxide),
a4) grafting at one end of said poly(alkylene oxide) a group of formula -S(C=S)R₁₀ wherein R₁₀ is as defined in claim 1.

8. The preparation method according to any of claims 1 to 7, comprising, after step c) or c'), an oxidation step d).

9. A block copolymer which may be obtained by the method according to any of claims 3 to 5.

10. A block copolymer comprising:
- at least one block A not comprising any phosphonate group, and comprising at least one poly(alkylene oxide) group and
- at least one block B obtained by polymerization of a monomer B1 or of a mixture of monomers with ethylenic unsaturation comprising at least 30% by weight of a monomer B1,
the monomer B1 having the following formula (IV): 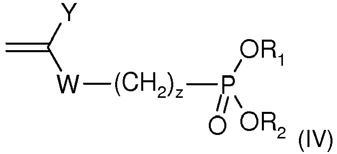
wherein:
- Y represents:
- a linear or branched alkyl having from 1 to 6 carbon atoms,
- a group -W-(CH₂)_{z}-P(=O)(OR₁)(OR₂), or
- a group (CH₂)ₓ-R₂₅, wherein x represents an integer comprised between 0 and 4 and R₂₅ represents a hydrogen atom, a phenyl or a group -CN or -CO₂R₉,
- z represents an integer comprised between 0 and 4,
- W represents a simple bond or a group -COO- or -CONH-, wherein when z represents 0, W represents a simple bond,
- R₁, R₂ and R₉ represent independently H, a phenyl or a linear or branched alkyl having from 1 to 6 carbon atoms and optionally substituted with one or several halogens.

11. The block copolymer according to claim 10, comprising at least one block B obtained by polymerization of a mixture of monomers with ethylenic unsaturation comprising at least 50% by weight of the monomer B1.

12. The block copolymer according to any of claims 9 to 11, wherein, in each block A, each poly(alkylene oxide) group has independently the following formula (I):
R₃-(O-R₄)ₙ- (I)
wherein:
- R₃ is a hydrogen atom or a monovalent hydrocarbon group including 1 a 12 carbon atoms and optionally one or several heteroatoms,
- n represents an integer from 2 to 500, preferably from 3 to 200,
- each R₄ represents independently a branched or linear alkylene group comprising from 2 to 6 carbon atoms.

13. The block copolymer according to claim 12, wherein, in each block A, each R₄ represents independently a group -CH₂-CH₂-, -CHCH₃-CH₂-, -CH₂-CHCH₃- or -CH₂-CH₂-CH₂-, preferably a group -CH₂-CH₂-.

14. The block copolymer according to any of claims 9 to 13, wherein the block A is obtained by polymerization of a monomer A1 or of a mixture of monomers with ethylenic unsaturation comprising at least one monomer A1, wherein a monomer A1 is a monomer with ethylenic unsaturation and comprising at least one poly(alkylene oxide) group.

15. The block copolymer according to claim 14, wherein the monomer A1 has the following formula (II): 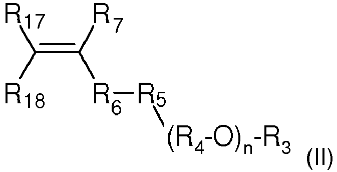 wherein:
- n, R₃ and R₄ are as defined in claim 12,
- R₅ represents -CH₂-, -O- or -NR₈- wherein R₈ represents H or a branched or linear alkyl group comprising from 1 to 6 carbon atoms, preferably H or Me,
- R₆ is absent or represents -(C=O)- or -(CH₂)_{q}-, wherein q represents 1, 2 or 3,
- R₇ represents H or Me, and
- R₁₇ and R₁₈ represent independently H or Me.

16. The block copolymer according to any of claims 9 to 15, wherein each block A of the block copolymer is obtained by polymerization of a mixture of monomers comprising less than 10% by weight of monomers comprising an ionic group.

17. The block copolymer according to any of claims 9 to 13, wherein the block A of the block of the copolymer according to the invention consists in a poly(alkylene oxide), notably in a poly(alkylene oxide) of formula (I) as defined in claim 12.

18. The block copolymer according to any of claims 9 to 17, wherein the block B has a degree of polymerization from 2 to 50, preferably from 3 to 15.

19. The block copolymer according to any of claims 9 to 18, having an weight-average molecular weight from 450 to 100,000 g/mol, preferably from 2000 to 40000 g/mol as determined by SEC ("size exclusion chromatography) in equivalents of standard poly(ethylene oxide).

20. The use of the block copolymer according to any of claims 9 to 19, as a dispersant agent of mineral particles, as plasticizer for suspensions of mineral particles, as an adhesion promoter, as an anticorrosion agent, as a flame retardant, as a stabilizer during milling of mineral particles, or as an anti-scale agent.

21. The use according to claim 20 of the block copolymer according to any of claims 9 to 19 as plasticizer for compositions comprising a hydraulic binder.

22. A composition of mineral particles comprising a copolymer according to any of claims 9 to 19.
